# EUROPEAN PATENT SPECIFICATION

(11) **EP 4 290 408 B1**
(45) Date of publication and mention of the grant of the patent: **30.09.2026**
(21) Application number: 22758951.2
(22) Date of filing: 25.02.2022
(51) Int. Cl.: G06V 10/80, G06V 10/82

(54) **FEATURE EXTRACTION METHOD AND APPARATUS**
VERFAHREN UND VORRICHTUNG ZUR MERKMALSEXTRAKTION
PROCÉDÉ ET APPAREIL D'EXTRACTION DE CARACTÉRISTIQUES

(30) Priority: 26.02.2021 CN 202110223032
(43) Date of publication of application: 13.12.2023
(73) Proprietor: Huawei Technologies Co., Ltd., Shenzhen, Guangdong 518129 (CN)
(72) Inventor: HAN, Kai, Shenzhen, Guangdong 518129 (CN); WANG, Yunhe, Shenzhen, Guangdong 518129 (CN); XIAO, An, Shenzhen, Guangdong 518129 (CN); GUO, Jianyuan, Shenzhen, Guangdong 518129 (CN); XU, Chunjing, Shenzhen, Guangdong 518129 (CN); QIAN, Li, Shenzhen, Guangdong 518129 (CN)
(74) Representative: Epping - Hermann - Fischer
(86) International application number: PCT/CN2022/077807
(87) International publication number: WO 2022/179587

(56) References cited:
- CN-A- 108 416 323
- CN-A- 108 509 904
- CN-A- 108 776 787
- CN-A- 112 257 759
- CN-A- 113 065 576
- US-A1- 2020 026 952
- ZHENYU XUAN ET AL: "FGN: Fusion Glyph Network for Chinese Named Entity Recognition", ARXIV.ORG, CORNELL UNIVERSITY LIBRARY, 201 OLIN LIBRARY CORNELL UNIVERSITY ITHACA, NY 14853, 15 January 2020 (2020-01-15), XP081626466

## Description

This application claims priority to Chinese Patent Application No. 202110223032.8, filed with the China National Intellectual Property Administration on February 26, 2021 and entitled "FEATURE EXTRACTION METHOD AND APPARATUS.

### TECHNICAL FIELD

This application relates to the field of artificial intelligence, and specifically, to a feature extraction method and apparatus.

### BACKGROUND

Computer vision is an integral part of various intelligent/autonomic systems in various application fields such as manufacturing, inspection, document analysis, medical diagnosis, and military affairs. Computer vision is knowledge about how to use a camera/video camera and a computer to obtain required data and information of a photographed object. Figuratively, an eye (a camera/video camera) and a brain (an algorithm) are mounted on a computer to replace human eyes to recognize, track, and measure a target, so that the computer can perceive an environment. Perceiving may be considered as extracting information from a sensory signal. Therefore, computer vision may also be considered as a science of studying how to make an artificial system perceive an image or multidimensional data. Generally, computer vision is to replace a visual organ with various imaging systems to obtain input information, and then replace a brain with a computer to process and interpret the input information. A final study objective of computer vision is to enable a computer to observe and understand the world through vision in a way that human beings do, and have a capability of automatically adapting to an environment.

With development of computer vision, more tasks including image classification, 2D detection, semantic segmentation, key point detection, linear object detection (for example, lane line or stop line detection in a self-driving technology), drivable area detection, scene recognition, and the like can be executed by using a visual perception model. A problem of great concern is how to enable the visual perception model to better complete a target task, so that performance and an effect of the visual perception model are better.

ZHENYU XUAN ET AL: "FGN: Fusion Glyph Network for Chinese Named Entity Recognition", ARXIVORG, focuses on extracting Chinese glyph information and fusing it into character representation.

CN 108 776 787 A discloses an image processing method including: performing feature extraction on a feature to be recognized by a plurality of feature extraction models, obtaining a plurality of first feature vectors, and fusing the plurality of first feature vectors a second feature vector; matching the second feature vector with a preset feature vector of the plurality of reference images to determine one of the preset feature vectors as a target feature vector; determining, by the target feature vector Identify the recognition result of the image.

### SUMMARY

This application provides a feature extraction method and apparatus, so that an extracted feature of a to-be-processed object can better characterize the to-be-processed object, thereby improving performance of a model to which the feature extraction method is applied.

To resolve the foregoing technical problem, the technical solutions as defined in the claims are provided. In the following, parts of the description and drawings referring to embodiments or aspects which are not covered by the claims are not presented as embodiments of the invention, but as examples useful for understanding the invention.

According to a first aspect, this application provides a feature extraction method. The method may include: Feature extraction is performed on a first vector by using a first feature extraction model, to obtain a first feature. The first vector indicates a first segmented object, and the first segmented object may include some elements in a to-be-processed object. A data type of the to-be-processed object may be image data, text data, or voice data. It may be understood that the segmented to-be-processed object includes some elements in the to-be-processed object. When the to-be-processed object is an image, some elements in the to-be-processed object are some pixels in the image; or when the to-be-processed object is a text or a voice, some elements in the to-be-processed object are characters or words in the text or the voice. Feature extraction is performed on a second vector by using a second feature extraction model, to obtain a plurality of second features, where the second vector indicates some elements in the first segmented object.

At least two second features are fused based on a first target weight, to obtain a first fused feature, where the first target weight is determined based on a first parameter value, and the first target weight is positively correlated with the first parameter value. The first parameter value indicates a similarity between each of the at least two second features and a target second feature, and the target second feature is any one of the at least two second features. Alternatively, the first target weight is a second parameter value, and the second parameter value includes at least one preset constant. A similarity between one or more second features and the target second feature may be measured in different manners. For example, the similarity may be measured by using a value of an inner product between two second features. A larger inner product between the two second features indicates a higher similarity between the two second features, and a greater weight, that is, the two features have great impact on each other. For example, it is assumed that the second features include a feature A, a feature B, and a feature C. When the target second feature is the feature B, it is assumed that an inner product between the feature A and the feature B is greater than an inner product between the feature A and the feature C, which represents a larger similarity between the feature A and the feature B. In this case, the feature A has greater impact on the feature B, and the feature C has smaller impact on the feature B. Weights may be respectively set to 0.9 and 0.1. In this case, the fusing at least two second features based on a first target weight may be understood as 0.9*A+B+0.1*C, and this result represents one first fused feature. It should be noted that using an inner product to represent a similarity between two features is only a manner of measuring the similarity between the two features. The similarity between the two features may also be measured in another manner. For example, a neural network model may be trained, so that a trained neural network is obtained to obtain the similarity between the two features. Alternatively, the first target weight may be preset. For example, each of the at least two second features may be set to have same impact on the target second feature. In this case, the target second feature and one or more other second features may be averaged, and an average value is added to the target second feature. It should be noted that the foregoing does not list all manners of measuring impact of one or more second features on the target second feature. In addition to the foregoing several measurement manners, other manners may be used for measurement.

Fusion processing is performed on the first feature and the first fused feature to obtain a second fused feature, where the second fused feature is used to obtain a feature of the to-be-processed object. The second fused feature is used to determine a final feature of the to-be-processed object. In a possible implementation, a second fused feature output by a last feature extraction module of a plurality of feature extraction modules in the first feature extraction model is used to determine a final extracted feature of the to-be-processed object. For each segmented object, the last feature extraction module outputs a corresponding second fused feature, and a set of second fused features is the final feature of the to-be-processed object. In a possible implementation, weighting processing is performed on a second fused feature that corresponds to each segmented object and that is output by the last feature extraction module, and a result of the weighting processing is used as the final feature of the to-be-processed object.

It can be learned from the solution provided in the first aspect that an association relationship between elements is established by using the second feature extraction model, where the association relationship is implicitly included in the first fused feature. The first fused feature and the first feature are fused, so that the extracted feature includes an association relationship between elements and can better the to-be-processed object. If the extracted feature of the to-be-processed object can represent more information of the to-be-processed object, it is more helpful for the model to analyze the to-be-processed object.

In a possible implementation of the first aspect, the method may further include: obtaining a third feature, where the third feature is obtained by performing feature extraction on a third vector by using the first feature extraction model. The third vector indicates a second segmented object, and the second segmented object may include some elements in the to-be-processed object. That fusion processing is performed on the first feature and the first fused feature to obtain a second fused feature may include: fusing the first feature and the third feature based on a second target weight, to obtain a third fused feature, where the second target weight is determined based on a third parameter value, and the third parameter value indicates a similarity between the third feature and the first feature, or the second target weight is a fourth parameter value, and the fourth parameter value includes at least one preset constant; and performing fusion processing on the third fused feature and the first fused feature to obtain the second fused feature. In this implementation, an association relationship between segmented objects is established by using the first feature extraction model. In a process of extracting the feature of the to-be-processed object, the association relationship between segmented objects is retained, and an association relationship between elements is retained, so that the extracted feature can represent the feature of the to-be-processed object. Further, performance of a model to which the feature extraction method is applied can be improved.

In a possible implementation of the first aspect, the first vector specifically indicates the first segmented object carrying first position information, and the first position information is position information of the first segmented object in the to-be-processed object. An example in which the to-be-processed object is an image is used for description. The first position information may be represented by using coordinate information of one pixel, or may be represented by using coordinate information of a plurality of pixels. For example, when the to-be-processed image is evenly segmented to obtain a plurality of image blocks, position information of each image block may be represented by coordinates of a pixel in an upper left corner of each image block. For another example, when each image block is a regular rectangle or square, the position information of each image block may be represented by coordinates of a pixel in an upper left corner and coordinates of a pixel in a lower right corner of each image block. Alternatively, the first position information may be represented by using a coding vector. In this implementation, the first vector includes more information, that is, the first position information, so that the first feature extraction model can obtain more information. More information obtained by the first feature extraction model can be more helpful for the first feature extraction model to learn, so as to better extract an image feature.

In a possible implementation of the first aspect, each second vector specifically indicates some elements in the first segmented object carrying second position information, and the second position information is position information, in the first segmented object, of some elements in the first segmented object. In this implementation, the second vector includes more information, that is, the second position information. More information obtained by the second feature extraction model can be more helpful for the second feature extraction model to learn, so as to better extract an image feature.

In a possible implementation of the first aspect, that fusion processing is performed on the first feature and the first fused feature to obtain a second fused feature may include: performing end-to-end concatenation processing on the first feature and the first fused feature to obtain the second fused feature. In this implementation, a specific manner of performing fusion processing on the first feature and the first fused feature is provided, thereby increasing diversity of the solution.

In a possible implementation of the first aspect, that fusion processing is performed on the first feature and the first fused feature to obtain a second fused feature may include: performing a target operation on the first feature and the first fused feature to obtain the second fused feature, where the target operation may include at least one of addition or multiplication. In this implementation, a specific manner of performing fusion processing on the first feature and the first fused feature is provided, thereby increasing diversity of the solution.

In a possible implementation of the first aspect, that a target operation is performed on the first feature and the first fused feature to obtain the second fused feature may include: when there are a plurality of first fused features, performing end-to-end concatenation processing on the plurality of first fused features to obtain a concatenated feature; mapping the concatenated feature to a feature of a target length, where the target length is determined based on a length of the first feature; and performing addition processing on the first feature and the feature of the target length to obtain the second fused feature. In this implementation, a specific manner of performing fusion processing on the first feature and the first fused feature is provided, thereby increasing diversity of the solution.

In a possible implementation of the first aspect, that at least two second features are fused based on a first target weight, to obtain a first fused feature may include: inputting the at least two second features into a target model, where an output of the target model is the first fused feature, the target model may include one of a self-attention network transformer, a convolutional neural network (CNN), or a recurrent neural network (RNN), and when the target model is the transformer, the first target weight is determined based on an inner product between each of the at least two second features and the target second feature, or when the target model is the CNN or the RNN, the first target weight is preset. In this implementation, several manners of obtaining the first fused feature are provided, thereby increasing diversity of the solution.

In a possible implementation of the first aspect, the to-be-processed object is a to-be-processed image, the first vector specifically indicates a first segmented image, the first segmented image may specifically include some pixels in the to-be-processed image, the second vector specifically indicates some pixels in the first segmented image, and the second fused feature is specifically used to obtain a feature of the to-be-processed image. In this implementation, the to-be-processed object is a to-be-processed image. In a process of extracting an image feature, an association relationship between image blocks is retained, and an association relationship between pixels (or pixel blocks) is retained. Therefore, a color feature, a texture feature, a shape feature, a spatial relationship feature, and the like of the image can be well captured based on the extracted image feature, and further, performance of a visual perception model can be improved.

According to a second aspect, this application provides a feature extraction model. The feature extraction model may include a first feature extraction model and a second feature extraction model. The first feature extraction model is configured to obtain a first feature, where the first feature is obtained by performing feature extraction on a first vector by using the first feature extraction model, the first vector indicates a first segmented object, and the first segmented object may include some elements in a to-be-processed object. The second feature extraction model is configured to obtain a plurality of second features, where the second feature is obtained by performing feature extraction on a second vector by using the second feature extraction model, and the second vector indicates some elements in the first segmented object. The second feature extraction model is further configured to fuse at least two second features based on a first target weight, to obtain a first fused feature, where the first target weight is determined based on a first parameter value, and the first target weight is positively correlated with the first parameter value. The first parameter value indicates a similarity between each of the at least two second features and a target second feature, and the target second feature is any one of the at least two second features. Alternatively, the first target weight is a second parameter value, and the second parameter value includes at least one preset constant. The first feature extraction model is further configured to perform fusion processing on the first feature and the first fused feature to obtain a second fused feature, where the second fused feature is used to obtain a feature of the to-be-processed object.

In a possible implementation of the second aspect, the first feature extraction model is further configured to obtain a third feature, where the third feature is obtained by performing feature extraction on a third vector by using the first feature extraction model, the third vector indicates a second segmented object, and the second segmented object may include some elements in the to-be-processed object; and the first feature extraction model is specifically configured to: fuse the first feature and the third feature based on a second target weight, to obtain a third fused feature, where the second target weight is determined based on a third parameter value, and the third parameter value indicates a similarity between the third feature and the first feature, or the second target weight is a fourth parameter value, and the fourth parameter value includes at least one preset constant; and perform fusion processing on the third fused feature and the first fused feature to obtain the second fused feature.

In a possible implementation of the second aspect, the first vector specifically indicates the first segmented object carrying first position information, and the first position information is position information of the first segmented object in the to-be-processed object.

In a possible implementation of the second aspect, each second vector specifically indicates some elements in the first segmented object carrying second position information, and the second position information is position information, in the first segmented object, of some elements in the first segmented object.

In a possible implementation of the second aspect, the first feature extraction model is specifically configured to perform end-to-end concatenation processing on the first feature and the first fused feature to obtain the second fused feature.

In a possible implementation of the second aspect, the first feature extraction model is specifically configured to perform a target operation on the first feature and the first fused feature to obtain the second fused feature, where the target operation may include at least one of addition or multiplication.

In a possible implementation of the second aspect, the first feature extraction model is specifically configured to: when there may be a plurality of first fused features, perform end-to-end concatenation processing on the plurality of first fused features to obtain a concatenated feature; map the concatenated feature to a feature of a target length, where the target length is determined based on a length of the first feature; and perform addition processing on the first feature and the feature of the target length to obtain the second fused feature.

In a possible implementation of the second aspect, the second feature extraction model is specifically configured to input the at least two second features into a target model, where an output of the target model is the first fused feature, the target model may include one of a self-attention network transformer, a convolutional neural network CNN, or a recurrent neural network RNN, and when the target model is the transformer, the first target weight is determined based on an inner product between each of the at least two second features and the target second feature, or when the target model is the CNN or the RNN, the first target weight is preset.

In a possible implementation of the second aspect, the to-be-processed object is a to-be-processed image, the first vector specifically indicates a first segmented image, the first segmented image may specifically include some pixels in the to-be-processed image, the second vector specifically indicates some pixels in the first segmented image, and the second fused feature is specifically used to obtain a feature of the to-be-processed image.

For all of specific implementation steps of the second aspect and the possible implementations of this application and beneficial effects brought by the possible implementations, refer to descriptions in the possible implementations of the first aspect. Details are not described herein again.

According to a third aspect, this application provides an image processing method. The method may include: obtaining a to-be-processed image; inputting the to-be-processed image into a visual perception model to extract an image feature by using a feature extraction model that may be included in the visual perception model, where the feature extraction model is the feature extraction model described in any one of the second aspect or the possible implementations of the second aspect; and performing visual perception on the to-be-processed image based on the image feature.

In a possible implementation of the third aspect, the performing visual perception on the to-be-processed image based on the image feature may include: classifying the to-be-processed image based on the image feature, to obtain a classification result of the to-be-processed image.

In a possible implementation of the third aspect, the obtaining a to-be-processed image may include: obtaining the to-be-processed image by using a sensor of a vehicle; and the performing visual perception on the to-be-processed image based on the image feature may include: performing semantic segmentation on the to-be-processed image based on the image feature, to obtain a region in which a target object in the to-be-processed image is located, where the target object may include one or more of a person, a vehicle, and a road surface.

In a possible implementation of the third aspect, the obtaining a to-be-processed image may include: obtaining the to-be-processed image by using a monitoring device; and the performing visual perception on the to-be-processed image based on the image feature may include: if the to-be-processed image recognized based on the image feature may include a person, recognizing an attribute of the person based on the image feature, where the attribute may include one or more of a gender, a complexion, an age, and clothes.

According to a fourth aspect, this application provides an electronic device. The electronic device may include a processor. The processor is coupled to a memory, the memory stores program instructions, and when the program instructions stored in the memory are executed by the processor, the method described in any one of the first aspect or the possible implementations of the first aspect is implemented.

According to a fifth aspect, this application provides a computer-readable storage medium. The computer-readable storage medium may include a program. When the program is run on a computer, the computer is enabled to perform the method described in any one of the first aspect and the possible implementations of the first aspect.

According to a sixth aspect, this application provides a circuit system. The circuit system may include a processing circuit, and the processing circuit is configured to perform the method described in any one of the first aspect or the possible implementations of the first aspect.

According to a seventh aspect, this application provides a computer program product. The computer program product includes instructions. When the instructions are loaded and executed by an electronic device, the electronic device is enabled to perform the method described in any one of the first aspect or the possible implementations of the first aspect.

According to an eighth aspect, this application provides a chip. The chip is coupled to a memory, and is configured to execute a program stored in the memory, to perform the method described in any one of the first aspect or the possible implementations of the first aspect.

For all of specific implementation steps of the fourth aspect to the eighth aspect and the possible implementations of this application and beneficial effects brought by the possible implementations, refer to descriptions in the possible implementations of the first aspect. Details are not described herein again.

### BRIEF DESCRIPTION OF DRAWINGS

FIG. 1 is a schematic diagram of a structure of an artificial intelligence main framework according to an embodiment of this application;
FIG. 2 is a diagram of a system architecture according to an embodiment of this application;
FIG. 3 is a schematic flowchart for performing feature extraction on an image;
FIG. 4 is a schematic flowchart of a feature extraction method according to an embodiment of this application;
FIG. 5A to FIG. 5C are a schematic flowchart for obtaining an element set according to an embodiment of this application;
FIG. 6 is a schematic flowchart for converting an image block into a vector representation according to an embodiment of this application;
FIG. 7 is a schematic diagram of a feature extraction model according to an embodiment of this application;
FIG. 8 is a schematic diagram of a feature extraction model according to an embodiment of this application;
FIG. 9 is a schematic flowchart of a feature extraction method according to an embodiment of this application;
FIG. 10 is a schematic diagram of a feature extraction model according to an embodiment of this application;
FIG. 11 is a schematic diagram of an application scenario of a feature extraction method according to an embodiment of this application;
FIG. 12 is a schematic diagram of an application scenario of a feature extraction method according to an embodiment of this application;
FIG. 13 is a schematic diagram of an architecture of an image classification model according to an embodiment of this application;
FIG. 14 is a diagram of an experiment result of performing an image classification task by using a model of a feature extraction method according to this application;
FIG. 15 is a schematic diagram of a structure of an electronic device according to an embodiment of this application;
FIG. 16 is a schematic diagram of another structure of an electronic device according to an embodiment of this application;
FIG. 17 is a schematic diagram of another structure of an electronic device according to an embodiment of this application; and
FIG. 18 is a schematic diagram of a structure of a chip according to an embodiment of this application.

### DESCRIPTION OF EMBODIMENTS

Embodiments of this application provide a feature extraction method and apparatus. The solutions provided in this application can improve performance and an effect of a visual perception model.

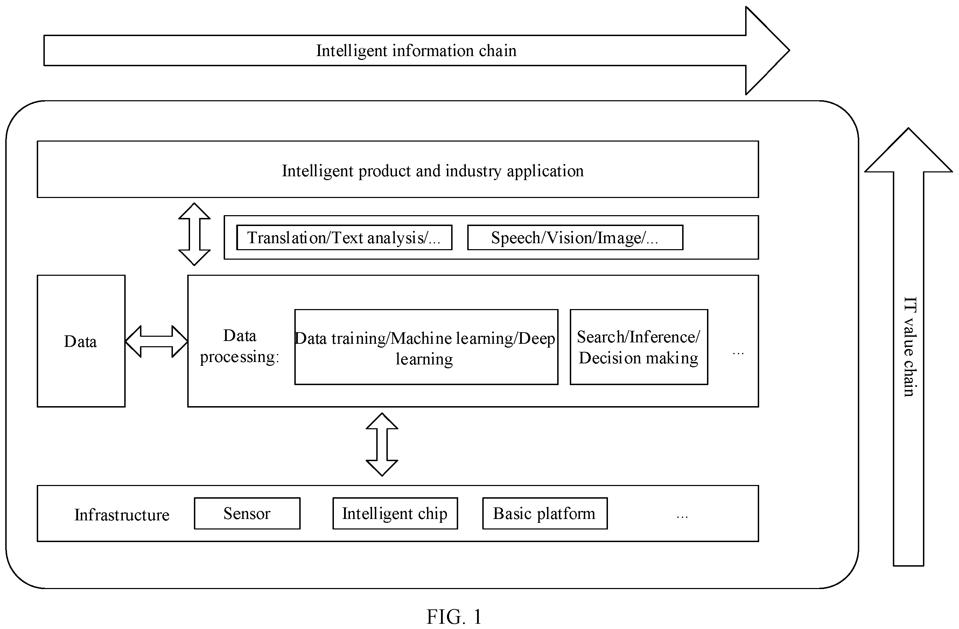

The following describes embodiments of this application with reference to the accompanying drawings. A person of ordinary skill in the art may learn that, with development of technologies and emergence of a new scenario, the technical solutions provided in embodiments of this application are also applicable to a similar technical problem. To better understand the solutions provided in this application, an overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

### (1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip. For example, the intelligent chip includes a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), and a field programmable gate array (field programmable gate array, FPGA). The basic platform includes related platforms, for example, a distributed computing framework and a network, for assurance and support, including cloud storage and computing, an interconnection network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the field of artificial intelligence. The data relates to a graph, an image, a speech, and a text, further relates to internet of things data of a conventional device, and includes service data of an existing system and perception data such as force, displacement, a liquid level, a temperature, and humidity.

### (3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, ranking, and prediction.

### (4) General capability

After data processing mentioned above is performed on data, some general capabilities, for example, an algorithm or a general system, such as image classification, personalized image management, personalized battery charging management, text analysis, computer vision processing, or speech recognition, may be further formed based on a data processing result.

### (5) Intelligent product and industry application

The intelligent product and the industry application are a product and an application of the artificial intelligence system in various fields, and are package of an overall solution of the artificial intelligence, so that decision making for intelligent information is productized and that the application is implemented. Application fields mainly include intelligent terminals, intelligent manufacturing, intelligent transportation, intelligent home, intelligent health care, intelligent security protection, self-driving, a smart city, and the like.

Embodiments of this application may be applied to a plurality of application scenarios in the foregoing fields, for example, may be applied to an application scenario of natural language search, to improve accuracy of natural language search; or may be applied to an application scenario of machine translation, to make a translation result more accurate; or may be applied to an application scenario of a multi-round dialog, to improve efficiency of man-machine communication. Embodiments of this application are mainly applied to application scenarios related to the computer vision field in the foregoing fields. For example, embodiments of this application may be applied to application scenarios such as facial recognition, image classification, target detection, semantic segmentation, key point detection, linear object detection (for example, lane line or stop line detection in a self-driving technology), drivable area detection, and scene recognition. In an example, embodiments of this application may be specifically applied to an application scenario of self-driving. A self-driving vehicle obtains an image of an environment around the vehicle by using a camera. The image obtained by the camera is segmented, and areas in which different objects such as a road surface, a roadbed, a vehicle, and a pedestrian are located are obtained through image segmentation, so that the vehicle keeps driving in a correct area. In the self-driving field, accuracy of image segmentation is critical to safety of vehicle driving. According to the solutions provided in this application, accuracy of image segmentation in the self-driving field can be improved. In another example, embodiments of this application may be applied to the field of intelligent monitoring. In the field of intelligent monitoring, a key task is to perform pedestrian attribute recognition based on an image obtained by a monitoring device. A pedestrian attribute recognition task needs to be performed to recognize common attributes of a pedestrian, for example, a gender, an age, hair, clothes, and wearing. This requires that an image feature can represent more image information, for example, carry more detailed information of an image. The image feature may be obtained by inputting an image obtained by a monitoring device into a feature extraction model, and the image feature of the image is extracted by using the feature extraction model. It should be noted that, in this application, the feature extraction model is sometimes referred to as a feature extraction module, and the feature extraction model and the feature extraction module have a same meaning. For example, in an example of the field of intelligent monitoring, an image obtained by a monitoring device is input into a target model, where the target model is used to perform a pedestrian attribute recognition task, the target model includes a feature extraction module, and an image feature is extracted by using the feature extraction module, so that the target model recognizes a pedestrian attribute based on the extracted image feature. According to the solutions provided in embodiments of this application, performance of the feature extraction model can be improved, so that the extracted image feature can better represent image information. More image information represented by the image feature can be more helpful for improving accuracy of a visual analysis task. For the pedestrian attribute recognition task, this is more helpful for improving accuracy of pedestrian attribute recognition.

It should be understood that application scenarios of embodiments of this application are not exhaustively listed herein. In the foregoing scenarios, the feature extraction method provided in embodiments of this application may be used, to improve performance of the feature extraction model.

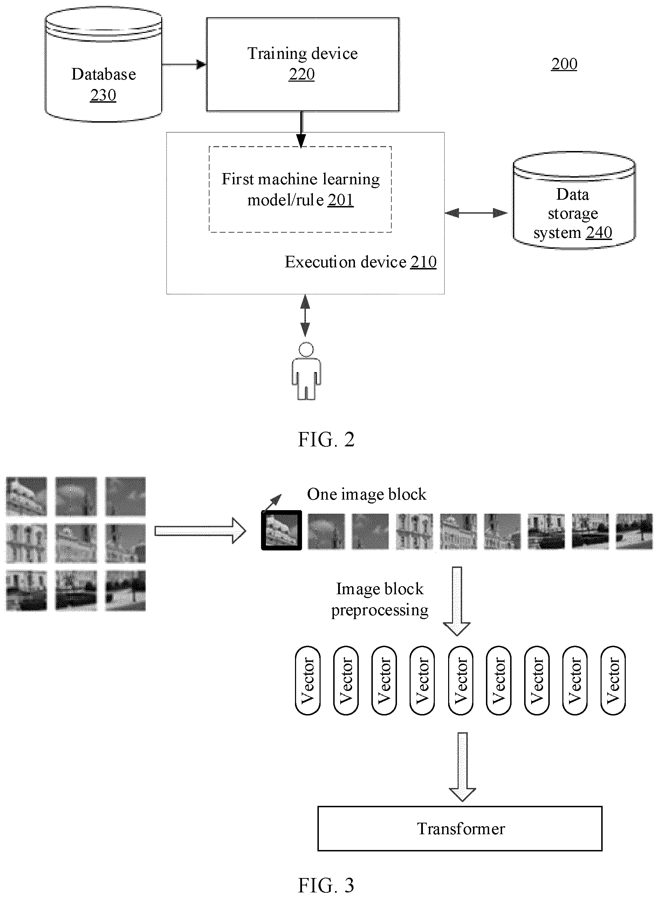

For better understanding of this solution, a system provided in an embodiment of this application is first described with reference to FIG. 2. FIG. 2 is a diagram of a system architecture according to an embodiment of this application. In FIG. 2, a system 200 includes an execution device 210, a training device 220, a database 230, and a data storage system 240.

In a training phase, the database 230 stores a training data set. The database 230 may be specifically represented as a storage medium in any form, and is not limited to a database in a conventional sense. The training data set may include a plurality of training samples. A data type of the training sample is not limited in this application. For example, the training sample may be image data, the training sample may be voice data, or the training sample may be text data. It should be noted that data types of the training samples included in the training data set are usually the same. The training device 220 generates a first machine learning model/rule 201, and performs iterative training on the first machine learning model/rule 201 by using the training data set in the database, to obtain a mature first machine learning model/rule 201. When the training sample is image data, the first machine learning model/rule 201 is also referred to as a visual perception model in this application. An example in which the training sample is image data is used to describe how to perform iterative training on the first machine learning model/rule 201 to obtain a mature first machine learning model/rule 201. When the image data is used as an input of the first machine learning model/rule 201, the first machine learning model/rule 201 extracts an image feature of the image data based on the feature extraction model, and the first machine learning model/rule 201 performs iterative training on the first machine learning model/rule 201 by using the extracted image feature. The training device may train the first machine learning model/rule 201 by using training data. Work at each layer of the first machine learning model/rule 201 may be described by using a mathematical expression *̅y̅*̅= *a*(*W*□*x̅+b*). From a physical perspective, work at each layer of a deep neural network may be understood as completing transformation from input space to output space (that is, from row space to column space of a matrix) by performing five operations on the input space (a set of input vectors). The five operations include: 1. dimension increasing or dimension reduction; 2. scaling up/down; 3. rotation; 4. translation; and 5. "bending". The operation 1, the operation 2, and the operation 3 are performed by *W*□*̅x̅*̅, the operation 4 is performed by +*b*, and the operation 5 is performed by *a*(). The word "space" is used herein for expression because a classified object is not a single thing, but a type of thing. Space is a set of all individuals of this type of thing. *W* is a weight vector, and each value in the vector indicates a weight value of one neuron at this layer of the neural network. The vector *W* determines space transformation from the input space to the output space described above.

In other words, a weight *W* at each layer controls how to transform space. A purpose of training the first machine learning model/rule 201 is to finally obtain a weight matrix (a weight matrix formed by vectors *W* at a plurality of layers) at all layers of the trained first machine learning model/rule 201. Therefore, the training process of the first machine learning model/rule 201 is essentially a manner of learning control of space transformation, and more specifically, learning a weight matrix.

It is expected that an output of the first machine learning model/rule 201 is as close as possible to an expected value that is really desired. An expected value that is really desired is related to a training goal of the first machine learning model/rule 201 or a task that needs to be completed by the first machine learning model/rule 201. For example, if the first machine learning model/rule 201 is used to perform an image classification task, an output of the first machine learning model/rule 201 is as close as possible to a real image classification result. It should be noted that this application focuses on how to enable the feature extracted by the first machine learning model/rule 201 to better represent information about a to-be-processed object. A specific task performed by the first machine learning model/rule 201 based on the extracted feature is not limited in this application. To make the output of the first machine learning model/rule 201 as close as possible to an expected value that is really desired, a current predicted value of the network may be compared with a target value that is really desired, and then a weight vector at each layer of the neural network is updated based on a difference between the current predicted value and the target value (certainly, there is usually an initialization process before the first update, that is, a parameter is preconfigured for each layer of the deep neural network). For example, if the predicted value of the network is large, the weight vector is adjusted to reduce the predicted value, and the adjustment is performed continuously until the neural network can predict the target value that is really desired. Therefore, "how to obtain, through comparison, a difference between the predicted value and the target value" needs to be predefined. This is a loss function or an objective function (objective function). The loss function and the objective function are important equations that measure the difference between the predicted value and the target value. The loss function is used as an example. A higher output value (loss) of the loss function indicates a larger difference. Therefore, training of the first machine learning model/rule 201 is a process of minimizing the loss as much as possible.

In an inference phase, the execution device 210 may invoke data, code, and the like in the data storage system 240, or may store data, instructions, and the like in the data storage system 240. The data storage system 240 may be configured in the execution device 210, or may be a memory outside the execution device 210. The execution device 210 may invoke the mature first machine learning model/rule 201 to extract a feature of the to-be-processed object, and perform a specific task based on the extracted feature of the to-be-processed object. A data type of the to-be-processed object is generally the same as a data type of the training sample. A specific task is determined based on a training task in the training phase. For example, in the training phase, iterative training is performed on the first machine learning model/rule 201 by using the training data set in the database, so that the mature first machine learning model/rule 201 can extract a feature from an image, and perform an image classification task based on the extracted feature. In the inference phase, the execution device 210 may invoke the mature first machine learning model/rule 201 to extract a feature of an image, and perform an image classification task based on the extracted image feature.

In some embodiments of this application, for example, in FIG. 2, a "user" may directly interact with the execution device 210. In other words, the execution device 210 and a client device are integrated into a same device. For example, in some application scenarios, the execution device 210 may be represented as a terminal device, for example, a mobile phone, a camera, or a smart home. In this case, in the inference phase, the user may input a to-be-processed object by using the execution device 210. For example, the user performs photographing by using a camera, and an image obtained by the camera is used as an input of the mature first machine learning model/rule 201. In some other application scenarios, the execution device 210 may be specifically represented as an execution device configured with a display screen. In the inference phase, after completing one task (or a plurality of tasks), the execution device 210 may display an output result of the first machine learning model/rule 201 to the user. For example, after performing the image classification task, the execution device 210 displays an image classification result to the user. The execution device 210 may also be represented in other forms, which are not listed herein one by one. However, FIG. 2 is only a schematic diagram of an architecture according to an embodiment of the present invention, and a position relationship between devices, components, modules, and the like shown in the figure does not constitute any limitation.

In some other embodiments of this application, the execution device 210 and the client device may be independent devices. The execution device 210 is configured with an input/output interface, to exchange data with the client device. The "user" may input at least one task to the execution device 210 by using the input/output interface of the client device, and the execution device 210 returns a processing result to the client device by using the input/output interface. A process of extracting a feature of a to-be-processed object is involved in both a process of performing iterative training on the first machine learning model/rule 201 and when the mature first machine learning model/rule 201 is used to perform a task. Therefore, the solutions provided in this application may be performed by the training device 220 or the execution device 210.

Currently, some first machine learning models/rules 201 require an input of a one-dimensional vector. For example, a self-attention network (for example, Transformer), a long short term memory (LSTM) neural network, and a gated recurrent unit network (GRU) require an input of a one-dimensional vector. However, the to-be-processed object is usually a multidimensional tensor. For example, an image is usually a three-dimensional tensor. Therefore, the to-be-processed object needs to be preprocessed, and the tensor needs to be converted into a vector before being used as an input of these models. The applicant finds that some solutions to preprocessing the to-be-processed object damage an internal structure of the to-be-processed object, and consequently, the extracted feature of the to-be-processed object loses detailed information, which is disadvantageous for correct prediction of these models. The following describes disadvantages of some solutions by using an example in which the to-be-processed object is an image and the first machine learning model/rule 201 is a transformer.

Refer to FIG. 3. Some practices are to segment an image into a plurality of image blocks. As shown in FIG. 3, an image is segmented into nine image blocks, and each image block includes 1/9 of the image, that is, includes 1/9 of pixels in the image. For each image block, the image block is converted into a vector representation, and the image block represented by the vector is used as an input of the transformer. The transformer is a neural network based on a self-attention mechanism. For an image block, when extracting an image feature, the transformer may establish an association relationship between the image block and all input image blocks. However, the applicant finds that this manner causes damage to the internal structure of the image, and specifically, this manner considers only an association relationship between image blocks, but does not consider an association relationship between pixels. After the image block is converted into the vector representation, some association relationships between pixels are lost. For example, if pixels are originally adjacent, because the image block is converted into the vector representation, the adjacent pixels are no longer adjacent, and an adjacency relationship between pixels is lost. In addition, an attempt to segment an image into image blocks small enough to resolve this problem may cause a new problem. To be specific, an increase in a quantity of image blocks causes a large increase in a calculation amount, and the increase in the calculation amount causes a decrease in model training efficiency and a decrease in model prediction efficiency after training.

To resolve the foregoing problem, an embodiment of this application provides a feature extraction method, so that a first machine learning model/rule 201 includes at least two self-attention modules, where one self-attention module is configured to establish an association relationship between image blocks, and the other self-attention module is configured to establish an association relationship between pixels, thereby improving model performance.

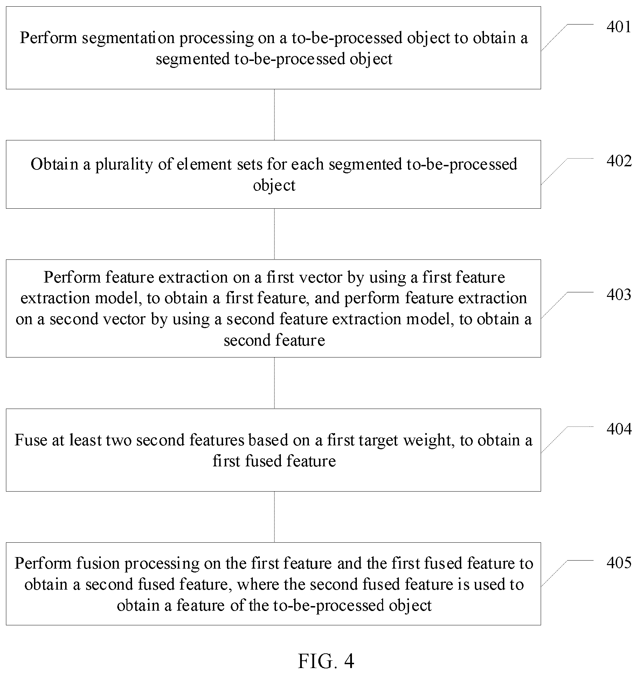

FIG. 4 is a schematic flowchart of a feature extraction method according to an embodiment of this application.

As shown in FIG. 4, the feature extraction method provided in this embodiment of this application may include the following steps.

401. Perform segmentation processing on a to-be-processed object to obtain a segmented to-be-processed object.

A data type of the to-be-processed object may be image data (image for short hereinafter), text data (text for short hereinafter), and voice data (voice for short hereinafter). It may be understood that the segmented to-be-processed object includes some elements in the to-be-processed object. When the to-be-processed object is an image, some elements in the to-be-processed object are some pixels in the image. When the to-be-processed object is a text or a voice, some elements in the to-be-processed object are characters or words in the text or the voice. In an optional implementation, the to-be-processed object in this application is image data. In the following embodiment, a feature extraction method provided in this application is described by using an example in which the to-be-processed object is image data. For ease of description, the segmented image is hereinafter referred to as an image block, each image block includes some pixels in the image, and all image blocks form a completed image.

In a possible implementation, the image may be evenly segmented, so that each segmented image block includes a same quantity of pixels. In a possible implementation, the image may not be evenly segmented, so that quantities of pixels included in all segmented image blocks are not completely the same. Specifically, some image blocks include a same quantity of pixels, some image blocks include different quantities of pixels, or all image blocks include different quantities of pixels. In addition, all pixels included in each image block may be adjacent pixels, or some pixels may be adjacent pixels, and some pixels are not adjacent pixels. The adjacent pixels mean that pixels in a complete image are in spatially adjacent positions. In a preferred implementation, the image may be evenly segmented, and all pixels included in each image block are adjacent pixels. An image is evenly segmented into n image blocks, which may be understood with reference to a formula 1-1. $χ = \left[{X}^{1}, {X}^{2}, ⋯, {X}^{n}\right] ∈ {ℝ}^{n \times p \times p \times 3}$

X represents the to-be-processed image. Each of X¹ to Xⁿ represents a segmented image block, and n is a positive integer greater than 1, and represents a quantity of segmented image blocks. R represents a tensor, and a size of the tensor is n×p×p×3, where a size of each image block is p×p×3, p×p may represent two dimensions of the image block, and 3 represents another dimension, that is, a channel dimension. For example, if a pixel value of an image, included in each image block may be a red, green, and blue (RGB) color value, the channel dimension of the image block is 3, and the pixel value may be a long integer representing a color.

The to-be-processed image is segmented into a plurality of image blocks, which helps accelerate image feature extraction progress of a model. In other words, the model may process the plurality of image blocks in parallel, and extract image features of the plurality of image blocks simultaneously.

402. Obtain a plurality of element sets for each segmented to-be-processed object.

Each element set includes some elements in the segmented to-be-processed object. For example, for each image block, an element set is obtained, and each element set includes some pixels in each image block. For ease of description, some pixels in the image block are hereinafter referred to as a pixel block.

A plurality of pixel blocks may be obtained for each image block, and quantities of pixels included in any two of the plurality of pixel blocks may be the same or different. In addition, pixels included in each pixel block may be adjacent pixels or non-adjacent pixels. For example, reference may be made to a formula 1-2 for understanding. ${Y}_{0}^{i} = \left[{y}_{0}^{i , 1}, {y}_{0}^{i , 2}, ⋯, {y}_{0}^{i , m}\right]$ where i = 1, 2, ..., n, and n is a positive integer greater than 1 and represents a quantity of segmented image blocks; ${y}_{0}^{i , j} ∈ {ℝ}^{c}$, *j* = 1, 2, ··· , *m*, where m is a positive integer greater than 1 and represents a quantity of pixel blocks included in one image block; and c represents a length of a vector corresponding to a pixel block.

In this case, there are n pixel block groups for n image blocks, which may be understood with reference to a formula 1-3. ${y}_{0} = \left[{Y}_{0}^{1}, {Y}_{0}^{2}, ⋯, {Y}_{0}^{n}\right]$

It should be noted that pixels included in any two of the plurality of pixel blocks may overlap.

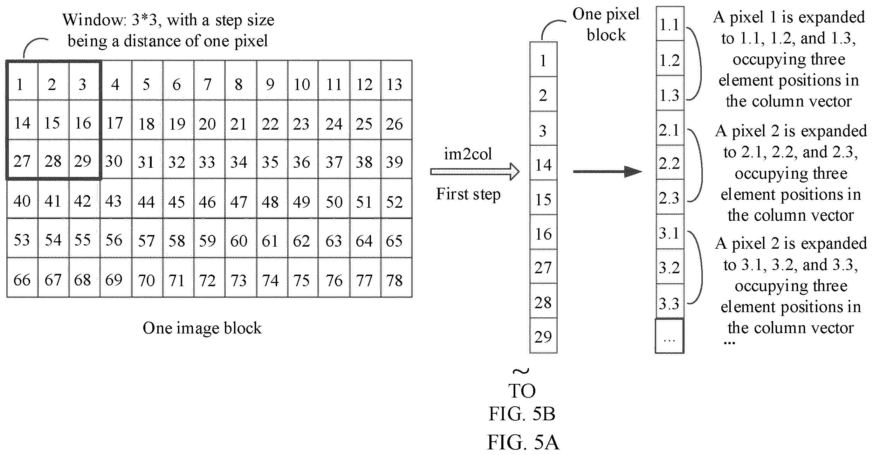

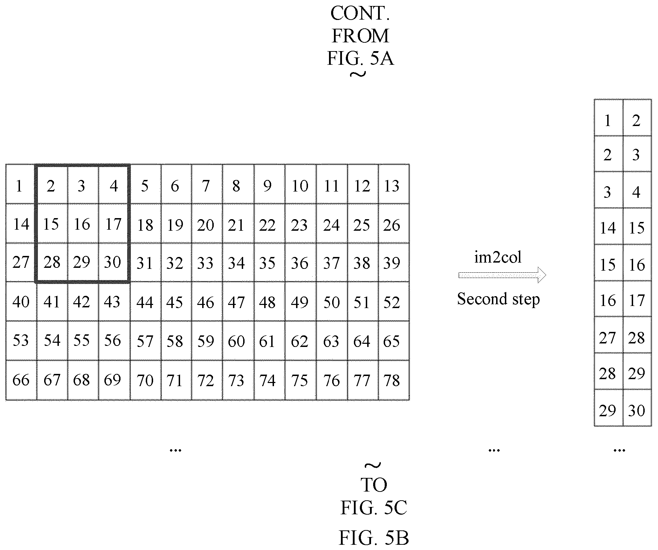

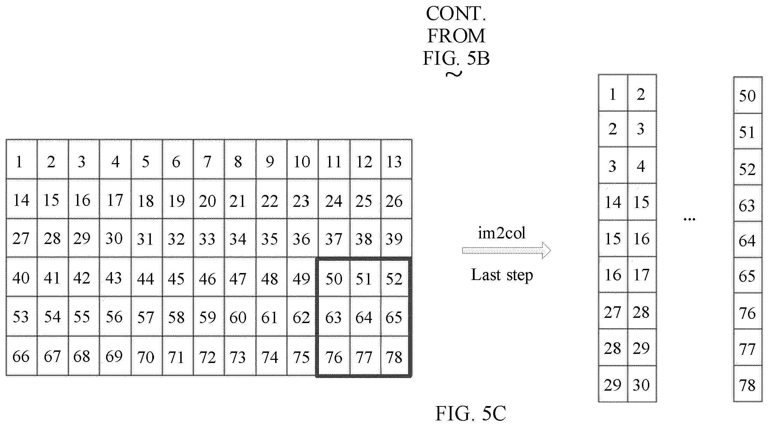

For example, the following provides a manner of obtaining an element set. The element set may be obtained in an image to column (image to column, im2col) manner. The im2col mainly converts data in each window of the image data into column vectors, and then arranges the column vectors by column to form a new matrix. The following provides descriptions with reference to FIG. 5A to FIG. 5C. As shown in FIG. 5A to FIG. 5C, each number represents one pixel, and a channel dimension of each pixel is not shown in FIG. 5A to FIG. 5C. An image is traversed by using a sliding window. A window size may be customized, for example, a 3×3 window in FIG. 5A to FIG. 5C, or may be customized as a window of another size, for example, 2×2 or 4×4. This is not limited in this embodiment of this application. A step size for sliding the window each time may also be customized, for example, a distance of one pixel, or a distance of two pixels. This is not limited in this embodiment of this application. Each time the window slides on an image block, all pixels included in the window may be considered as one pixel block. Because each pixel block has a channel dimension, after each pixel is expanded, each pixel corresponds to a plurality of positions in one column vector. For example, each pixel may include three channels: red, green, and blue. After being expanded, each pixel block corresponds to three element positions in one column vector. Each pixel block may be converted into a row vector or a column vector. FIG. 5A to FIG. 5C show a process of converting a pixel block into a column vector.

403. Perform feature extraction on a first vector by using a first feature extraction model, to obtain a first feature, and perform feature extraction on a second vector by using a second feature extraction model, to obtain a second feature. The first vector indicates a segmented to-be-processed object. For example, the first vector indicates the image block mentioned in step 401 and step 402. The second vector indicates some elements in a segmented object. For example, the second vector indicates the pixel block mentioned in step 401 and step 402.

The first feature extraction model and the second feature extraction model may be understood as a plurality of feature extraction modules in the first machine learning model/rule 201 mentioned above. For example, the first feature extraction model and the second feature extraction model may be a CNN or an RNN. The first feature extraction model includes a plurality of feature extraction modules, and the second feature extraction model includes a plurality of feature extraction modules. For one of the first feature extraction model and the second feature extraction model, the plurality of feature extraction modules are connected end-to-end, and an output of a feature extraction module is used as an input of a next feature extraction module, so that the next feature extraction module continues to perform feature extraction. Each feature extraction module has a specific weight matrix, and a function of the feature extraction module in image processing is equivalent to a filter for extracting specific information from an input image matrix. The weight matrix is used to traverse an input, to complete a task of extracting a specific feature from an image. For a current feature extraction module of the first feature extraction model, an output of a feature extraction module may be considered as a first feature. The image feature mainly includes a color feature, a texture feature, a shape feature, a spatial relationship feature, and the like of the image. The color feature is a global feature, and describes a surface property of a scene corresponding to an image or an image region. The color feature is usually a pixel-based feature. In this case, all pixels belonging to the image or the image region have respective contributions. Because the color is insensitive to changes of a direction, a size, and the like of the image or the image region, the color feature cannot well capture a local feature of an object in the image. The texture feature is also a global feature, and also describes a surface property of a scene corresponding to an image or an image region. However, a texture is only a feature of a surface of an object, and cannot completely reflect an essential attribute of the object. Therefore, content of a high-layer image cannot be obtained by only using the texture feature. Different from the color feature, the texture feature is not a pixel-based feature, but needs to be statistically calculated in a region including a plurality of pixels. The shape feature is classified into two types in a representation method: One is a contour feature, and the other is a region feature. The contour feature of the image is mainly for an outer boundary of an object. The region feature of the image is related to an entire shape region. The spatial relationship feature refers to a spatial position or relative direction relationship between a plurality of objects obtained through image segmentation. These relationships may also be classified into a connection/adjacency relationship, an overlapping relationship, an inclusion relationship, and the like. Spatial position information may be usually classified into relative spatial position information and absolute spatial position information. The relative spatial position information emphasizes a relative status between targets, for example, an up and down relationship or a left and right relationship. The absolute spatial position information emphasizes a distance between targets and orientations of the targets. It should be noted that the image features listed above may be used as some examples of specific features in the image, and the image may further have other features, for example, a higher-level feature: a semantic feature. Details are not described herein again.

404. Fuse at least two second features based on a first target weight, to obtain a first fused feature.

For one feature extraction module in the second feature extraction model, the feature extraction module fuses the at least two second features based on the first target weight, to obtain the first fused feature. A purpose of obtaining the first fused feature is to establish an association relationship between pixel blocks. Establishing an association relationship between pixel blocks may be understood as taking impact of one or more other pixel blocks on a pixel block into account when extracting an image feature of the pixel block. If the impact of the one or more other pixel blocks on the pixel block is greater, the weight is greater. If the impact of the one or more other pixel blocks on the pixel block is smaller, the weight is smaller. The impact of the one or more pixel blocks on the pixel block may be measured in different manners. For example, the impact may be measured by using a similarity between vectors corresponding to two pixel blocks. Specifically, the impact may be measured by using a value of an inner product between the vectors corresponding to the two pixel blocks. A larger inner product between the vectors corresponding to the two pixel blocks indicates a higher similarity between the two pixel blocks, and a greater weight. For another example, the neural network model may be further trained, and a similarity between pixel blocks may be obtained by using the neural network model. Alternatively, a preset operation may be performed on the vectors corresponding to the two pixel blocks, and impact of another pixel block on the pixel block is obtained based on a result of the preset operation. For example, an average value may be calculated for a vector corresponding to the to-be-processed pixel block and a vector corresponding to a pixel block adjacent to the to-be-processed pixel block, and the average value is superimposed on the vector corresponding to the to-be-processed pixel block.

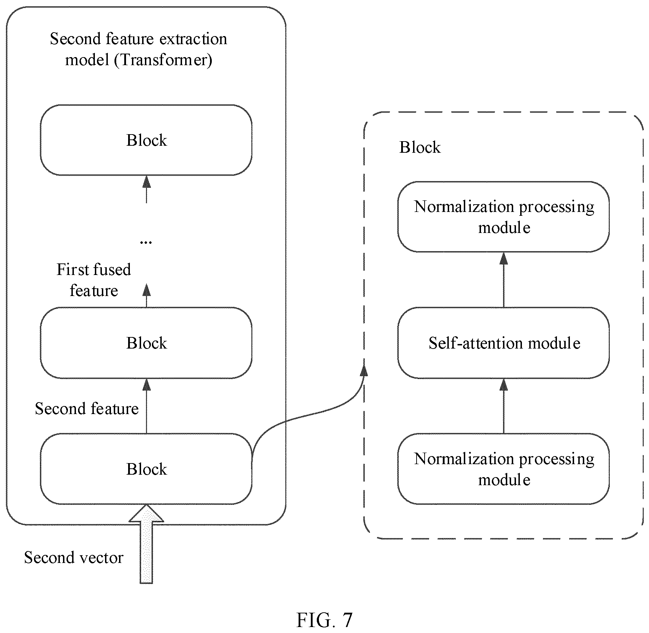

In a preferred implementation, the second feature extraction model may be a neural network having a self-attention mechanism. For example, the second feature extraction model may be a transformer. When the second feature extraction model is the transformer, the first fused feature may be obtained after feature extraction is performed on the second vector by using the second feature extraction model. Assuming that the second feature extraction model is the transformer and that the to-be-processed object is image data, the following describes feature extraction performed on the second vector by using the second feature extraction model, to obtain the second feature or the first fused feature. Refer to FIG. 7. When the second feature extraction model is the transformer, the plurality of feature extraction modules in the second feature extraction model may be specifically a plurality of feature extraction blocks configured to perform feature processing. The plurality of blocks are connected end-to-end, and an output of a block is used as an input of a next block, so that the next block continues to perform feature extraction. Each block has a specific weight matrix, and a function of the block in image processing is equivalent to a filter for extracting specific information from an input image matrix. The weight matrix is used to traverse an input, to complete a task of extracting a specific feature from an image.

In a process of extracting an image feature by each block, an association relationship between pixels (or pixel blocks) may be established in a plurality of manners. When each block in the second feature extraction model performs feature extraction on a pixel block, self-attention calculation is performed on a plurality of pixel blocks, and impact of each pixel block on the currently processed pixel block is taken into account. FIG. 7 is a schematic diagram of an architecture of the transformer. Stilling refer to FIG. 7, one block generally includes a normalization processing module. The normalization processing module is configured to perform normalization processing on an input. The normalization processing may be understood as making an average value of input data be 0 and a standard deviation be 1, so that a loss value smoothly decreases in each training process. An output of the normalization processing module may be considered as a second feature. One block may further include a self-attention module, and the output of the normalization processing module is used as an input of the self-attention module. When one block is a block of the second feature extraction model, self-attention calculation is performed on a plurality of pixel blocks by using the self-attention module, to establish an association relationship between pixel blocks. One block may further include another normalization processing module, and normalization processing is performed on an output of the self-attention module, so that the loss value can decrease in each training process more smoothly. For a current block, an output of a block of the current block may be considered as a second feature, an input of the previous block may be considered as a second vector, an output of the previous block is used as an input of the current block, and an output of the current block is a first fused feature. For a next block of the current block, the output of the current block may be considered as a second feature, and an output of the next block is a first fused feature. It should be noted that when the current block is a first block, the input of the current block is not the second feature but can only be the second vector.

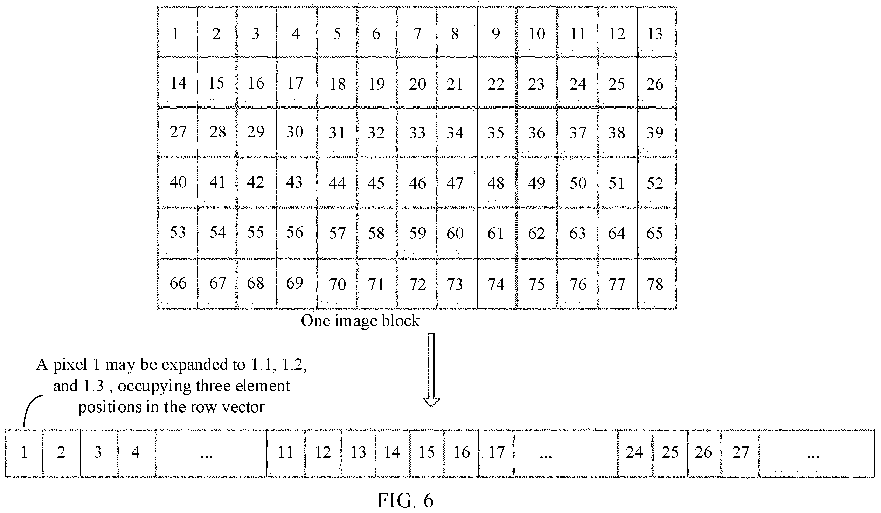

In a preferred implementation, the first feature extraction model and the second feature extraction model are the foregoing models that require an input of a one-dimensional vector. For example, the first feature extraction model may be one of the transformer, a GRU, and an LSTM, and the second feature extraction model may be one of the transformer, the GRU, and the LSTM. As mentioned above, these feature extraction models require an input of a one-dimensional vector. Therefore, for these models, after the image block and the pixel block are obtained in step 401 and step 402, the image block further needs to be converted into a vector representation, the image block represented by the vector is used as an input of the first feature extraction model, the pixel block is converted into a vector representation, and the pixel block represented by the vector is used as an input of the second feature extraction model. There may be a plurality of representations for converting an image block into a vector representation. For example, refer to FIG. 6 for understanding. Pixels in each row of the image block may be concatenated end-to-end. Because each pixel block has a channel dimension, after each pixel is expanded, each pixel corresponds to a plurality of positions in one column vector. For example, each pixel may include three channels: red, green, and blue. After being expanded, each pixel block corresponds to three element positions in one column vector. Each image block may be converted into a row vector or a column vector. After vectors corresponding to all image blocks are sorted by row or by column, a vector matrix of the image blocks may be obtained. A manner of converting a pixel block into a vector representation may be understood with reference to a manner of converting an image block into a vector representation. For example, in the foregoing example of obtaining a pixel block by using im2col, all pixels included in each window are expanded into one column vector, so that a plurality of column vectors may be obtained, and then the vectors are sorted by column, to obtain a vector matrix of the pixel block. In addition, the first feature extraction model and the second feature extraction model may also have a requirement on a size of an input vector. For example, only a vector of a preset length can be used as an input of the first feature extraction model and the second feature extraction model. Therefore, in some possible implementations, mapping processing further needs to be performed on a vector obtained through conversion of each image block, to map the vector obtained through conversion of the image block to a vector of a preset length, so as to meet an input requirement of the first feature extraction model; and mapping processing further needs to be performed on a vector obtained through conversion of each pixel block, to map a vector obtained through conversion of the pixel block to a vector of a preset length, so as to meet an input requirement of the second feature extraction model. The first vector in this application indicates a segmented to-be-processed object. For example, the first vector indicates the image block mentioned in step 401 and step 402. The second vector indicates some elements in a segmented object. For example, the second vector indicates the pixel block mentioned in step 401 and step 402. If the first vector is used as an input of the first feature extraction model, and the second vector is used as an input of the second feature extraction model, the first vector further meets an input requirement of the first feature extraction model, and the second vector further meets an input requirement of the second feature extraction model.

405. Perform fusion processing on the first feature and the first fused feature to obtain a second fused feature, where the second fused feature is used to obtain a feature of the to-be-processed object.

For a feature extraction module in the second feature extraction model, fusion processing may be performed on the first feature and the first fused feature in a plurality of manners according to the solution provided in this application. The following separately provides descriptions from two aspects: a fusion occasion and a fusion manner.

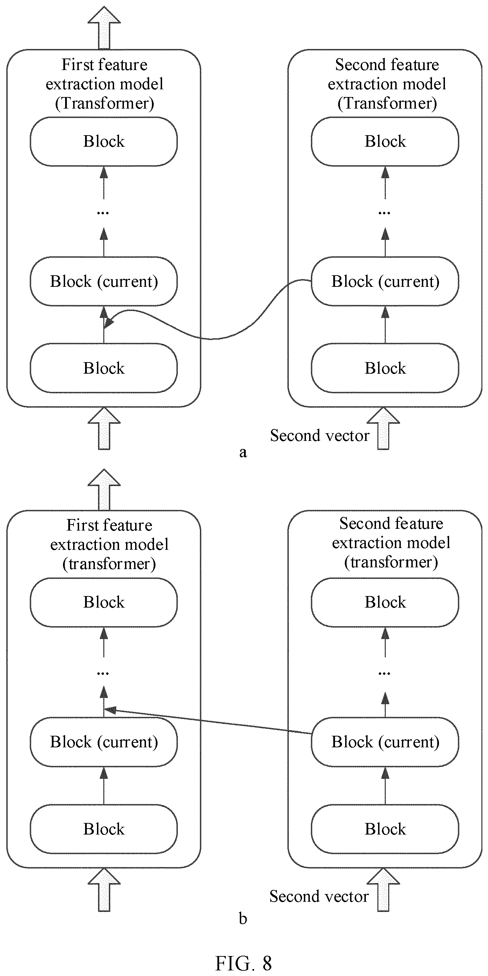

The fusion occasion is first described. Refer to subfigure a in FIG. 8. In the solution provided in this application, the first machine learning model/rule 201 includes two feature extraction models, that is, the first feature extraction model and the second feature extraction model. The second feature extraction model establishes an association relationship between pixels (or pixel blocks). For details, refer to step 403 for understanding. The first feature extraction model may establish an association relationship between image blocks. How to establish an association relationship between image blocks may be understood with reference to how to establish an association relationship between pixel blocks. Specifically, during extraction of an image feature of an image block, impact of one or more other image blocks on the image block is taken into account. Details are not described herein again. The first feature extraction model described above includes a plurality of feature extraction modules. For the current feature extraction module, an output of the previous feature extraction module is used as an input of a current feature extraction module, and an input of the previous feature extraction module may be considered as a first vector. Still refer to subfigure a in FIG. 8. In a possible implementation, after fusion processing is performed on a first feature output by the previous feature extraction module in the first feature extraction model and a first fused feature output by a current feature extraction module in the second feature extraction model, a second fused feature is obtained, and the second fused feature is used as an input of the current feature extraction module in the first feature extraction model. Refer to subfigure b in FIG. 8. In a possible implementation, a first feature output by the previous feature extraction module in the first feature extraction model may be used as an input of the current feature extraction module in the first feature extraction model, and after fusion processing is performed on an output of the current feature extraction module in the first feature extraction model and a first fused feature output by the current feature extraction module in the second feature extraction model, a second fused feature is obtained and used as an input of the next feature extraction module in the first feature extraction model.

Then the fusion manner is described. In a possible implementation, when there are a plurality of first fused features, end-to-end concatenation processing may be performed on the plurality of first fused features to obtain a concatenated feature. The concatenated feature is mapped to a feature of a target length, where the target length is determined based on a length of the first feature. If a length of the concatenated feature is the same as the length of the first feature, addition processing may be directly performed on the two features, that is, addition processing is performed on the first feature and the feature of the target length to obtain the second fused feature. In a possible implementation, end-to-end concatenation processing is performed on the first feature and the first fused feature to obtain the second fused feature. For example, concatenation processing is performed on the first feature and the concatenated feature to obtain the second fused feature. In a possible implementation, a target operation is performed on the first feature and the first fused feature to obtain the second fused feature, where the target operation includes at least one of addition or multiplication.

The second fused feature is used to determine a final feature of the to-be-processed object. In a possible implementation, the second fused feature output by the last feature extraction module of the plurality of feature extraction modules in the first feature extraction model is used to determine a final extracted feature of the to-be-processed object. For each image block, the last feature extraction module outputs a corresponding second fused feature, and a set of second fused features is a final feature of the to-be-processed object. In a possible implementation, weighting processing is performed on the second fused feature that corresponds to each image block and that is output by the last feature extraction module, and a result of the weighting processing is used as the final feature of the to-be-processed object.

As can be learned from the embodiment corresponding to FIG. 4, in the solution provided in this application, in a process of extracting an image feature by using the first machine learning model/rule 201, an association relationship between image blocks is retained, and an association relationship between pixels (or pixel blocks) is retained. Therefore, the color feature, the texture feature, the shape feature, the spatial relationship feature, and the like of the image can be well captured based on the image feature extracted by the first machine learning model/rule 201, and further, performance of the first machine learning model/rule 201 can be improved. In addition, it should be noted that the embodiment corresponding to FIG. 4 is mainly described by using image data as an example. However, it should be clarified that the solution provided in this application is also applicable to another type of data. For example, for text data, in a process of extracting a text feature by using the first machine learning model/rule 201, an association relationship between text blocks is retained, and an association relationship between word blocks is retained, so that a semantic feature of a text can be well captured based on the text feature extracted by the first machine learning model/rule 201. A text block may be understood as including some elements in the to-be-processed text data, for example, including some adjacent words in the to-be-processed text data. A word block may be understood as including some elements in the text block, for example, including some adjacent words in the text block. In all the following embodiments, image data is used as an example for description. Processing of other types of data may be understood with reference to the process of processing image data, and details are not described herein again. Alternatively, position information of an image block and a pixel block may be retained in the processing of extracting the image feature by the model, so that the color feature, the texture feature, the shape feature, the spatial relationship feature, and the like of the image can be well captured based on the image feature extracted by the first machine learning model/rule 201. The following provides descriptions with reference to an embodiment.

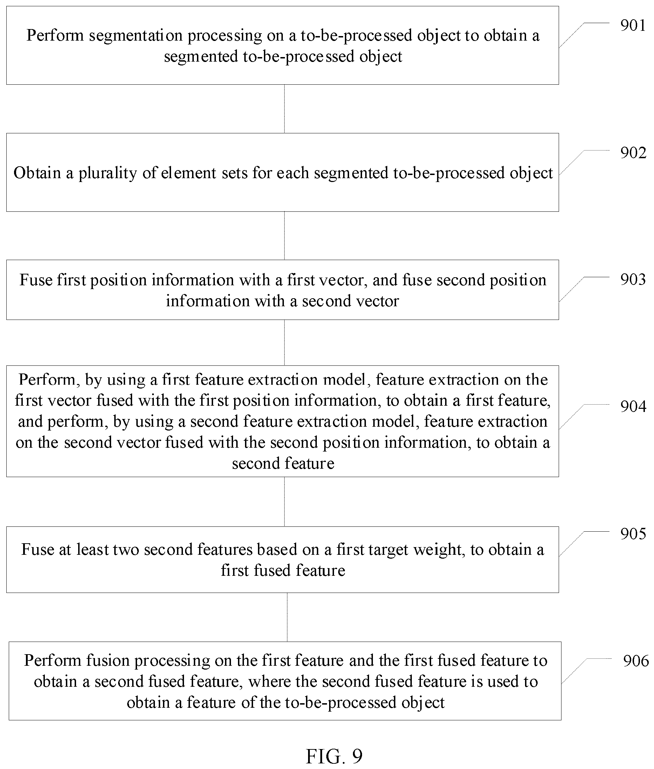

FIG. 9 is a schematic flowchart of a feature extraction method according to an embodiment of this application.

As shown in FIG. 9, the feature extraction method provided in this embodiment of this application may include the following steps.

901. Perform segmentation processing on a to-be-processed object to obtain a segmented to-be-processed object. 902. Obtain a plurality of element sets for each segmented to-be-processed object.

Step 901 and step 902 may be understood with reference to step 401 and step 402 in the embodiment corresponding to FIG. 4, and details are not described herein again.

903. Fuse first position information with a first vector, and fuse second position information with a second vector.

The first position information is position information of the segmented object in the to-be-processed object. For example, the first position information is position information of a segmented image block in an image. The second position information is position information of some elements in the segmented object, in the segmented object. For example, the second position information is position information of a pixel block in the image block.

The first position information may be represented by using coordinate information of one pixel or may be represented by using coordinate information of a plurality of pixels. For example, when the to-be-processed image is evenly segmented to obtain a plurality of image blocks, position information of each image block may be represented by coordinates of a pixel in an upper left corner of each image block. For another example, when each image block is a regular rectangle or square, the position information of each image block may be represented by coordinates of a pixel in an upper left corner and coordinates of a pixel in a lower right corner of each image block. It should be noted that the coordinates of the pixel in the upper left corner and the coordinates of the pixel in the lower right corner herein are merely examples for description, and are used to indicate that the first position information may be represented by using coordinate information of one pixel or coordinate information of a plurality of pixels, and does not represent a limitation on the solution provided in this application.

The second position information may be represented by using coordinate information of one pixel or may be represented by using coordinate information of a plurality of pixels. In addition, because all pixels included in a pixel block may be non-adjacent pixels, position information in the pixel block may be represented by coordinates of all the pixels included in the pixel block.

The first position information and the second position information may be not only represented by using the coordinate information of the pixel, but also represented by using a coding vector. The first position information is used as an example for description. The first machine learning model/rule 201 may include a position coding module. In an initial state, the position coding module may randomly set a vector to represent position information of each image block. In a process of performing iterative training on the first machine learning model/rule 201, a parameter of the position coding module may be updated based on a loss value, so that a vector encoded by the position coding module and used to represent position information of an image block may be closer to real position information of the image block. Fusing the first position information with the first vector and fusing the second position information with the second vector may be understood as updating Xⁿ in the formula 1-1 and Y₀ᵢ in the formula 1-3. For understanding, refer to the formulas 1-4 and the formulas 1-5: ${X}^{n} ← {X}^{n} + {E}_{posi ti on - patch}$ and ${{Y}_{0}}^{i} ← {{Y}_{0}}^{i} + {E}_{position - pixel}$ where *E* _{*posi* ti*on - patch*} represents the first position information, and *E _{position - pixel}* represents second position information.

As described in the embodiment corresponding to FIG. 4, in a possible implementation, a weight matrix of each feature extraction module in the first feature extraction model is 0. In this case, the first vector carries only the first position information. For example, if the weight matrix of each feature extraction module in the first feature extraction model is 0, for the first feature extraction module in the first feature extraction model, an input of the first feature extraction module is n first vectors, and values of all elements in each of the n first vectors are 0. The n first vectors fused with the first position information are used as the input of the first feature extraction module. In a possible implementation, alternatively, the input of the first feature extraction module may be n+1 first vectors, and values of all elements in each of the n+1 first vectors are 0. For the n+1 first vectors, n vectors are used to fuse the first position information, and the remaining vector indicates a weighted average value of the first position information corresponding to each image block.

904. Perform, by using the first feature extraction model, feature extraction on the first vector fused with the first position information, to obtain a first feature, and perform, by using the second feature extraction model, feature extraction on the second vector fused with the second position information, to obtain a second feature.

905. Fuse at least two second features based on a first target weight, to obtain a first fused feature.

906. Perform fusion processing on the first feature and the first fused feature to obtain a second fused feature, where the second fused feature is used to obtain a feature of the to-be-processed object.

Step 904 to step 906 may be understood with reference to step 403 to step 405 in the embodiment corresponding to FIG. 4. A difference lies in that in the embodiment corresponding to FIG. 9, more information may be provided for both the first feature extraction model and the second feature extraction model, and specifically, the first position information and the second position information are provided. More information obtained by the first feature extraction model and the second feature extraction model can be more helpful for the first feature extraction model and the second feature extraction model to learn, so as to better extract an image feature.

In the embodiments of FIG. 4 and FIG. 9, the solutions provided in this application are described. The first machine learning model/rule 201 includes the first feature extraction model and the second feature extraction model, and in the process of extracting the image feature by using the first machine learning model/rule 201, an association relationship between image blocks is retained, and an association relationship between pixels (or pixel blocks) is retained.

Therefore, a color feature, a texture feature, a shape feature, a spatial relationship feature, and the like of the image can be better captured based on the image feature extracted by the first machine learning model/rule 201, and further, performance of the first machine learning model/rule 201 can be improved. In some possible implementations, the first machine learning model/rule 201 may further include more first feature extraction models and more second feature extraction models. The following provides descriptions with reference to a specific embodiment.

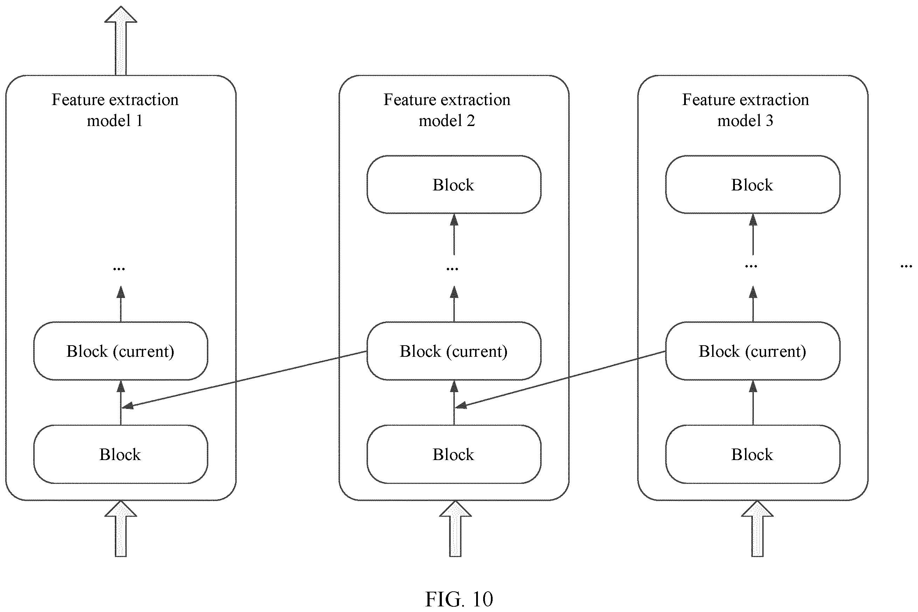

FIG. 10 is a schematic diagram of an architecture of a model according to an embodiment of this application. The model may include a plurality of feature extraction models, for example, a feature extraction model 1, a feature extraction model 2, and a feature extraction model 3 shown in FIG. 10. For the feature extraction model 1, the feature extraction model 1 is equivalent to the first feature extraction model, and both the feature extraction model 2 and the feature extraction model 3 are equivalent to the second feature extraction model. For the feature extraction model 2, the feature extraction model 1 is equivalent to the first feature extraction model, and the feature extraction model 2 is equivalent to the second feature extraction model. Alternatively, the feature extraction model 2 is equivalent to the first feature extraction model, and the feature extraction model 3 is equivalent to the second feature extraction model. For the feature extraction model 3, both the feature extraction model 1 and the feature extraction model 2 are equivalent to the first feature extraction model, and the feature extraction model 3 is equivalent to the second feature extraction model. Specific execution processes of the first feature extraction model and the second feature extraction model have been described in detail in the embodiments corresponding to FIG. 4 and FIG. 9, and are not described herein again.

In a possible implementation, the to-be-processed image may be segmented for a plurality of times. For example, in one segmentation, the to-be-processed image is segmented into four image blocks, then the four image blocks are preprocessed, and the four preprocessed image blocks meeting an input requirement of the feature extraction model 1 are used as an input of the feature extraction model 1. In another segmentation, the to-be-processed image is segmented into 16 image blocks, then the 16 image blocks are preprocessed, and the 16 preprocessed image blocks meeting an input requirement of the feature extraction model 2 are used as an input of the feature extraction model 2. In another segmentation, the to-be-processed image is segmented into 64 image blocks, then the 64 image blocks are preprocessed, and the 64 preprocessed image blocks meeting an input requirement of the feature extraction model 3 are used as an input of the feature extraction model 3. It should be noted that, in a possible implementation, a plurality of feature extraction models, for example, the feature extraction model 1, the feature extraction model 2, and the feature extraction model 3, can work in parallel.

According to the solution provided in this embodiment of this application, performance of the feature extraction model can be improved, so that the extracted image feature can better represent image information. More image information represented by the image feature can be more helpful for improving accuracy of a visual analysis task. The following describes the solution provided in this application by using an example in which the solution provided in this application is applied to several typical visual analysis tasks.

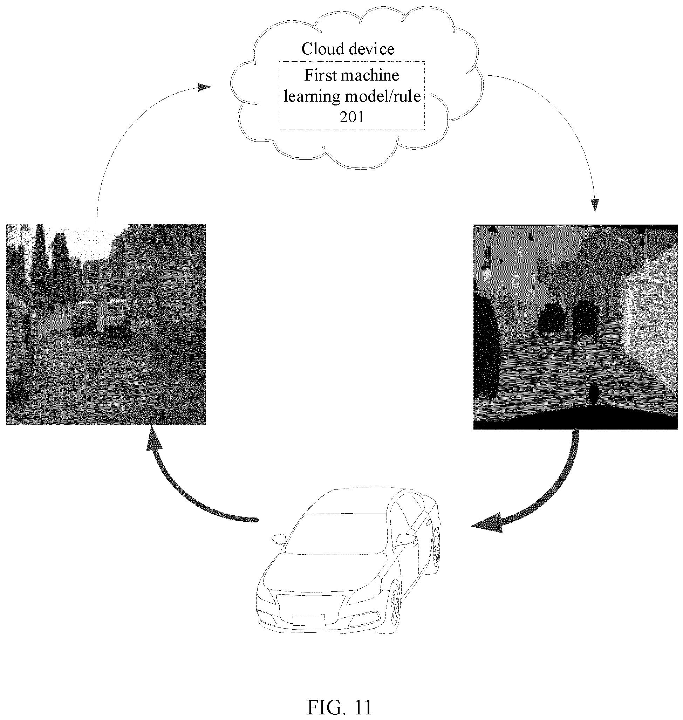

Referring to FIG. 11, when the solution provided in this application is applied to an application scenario of self-driving, a mature first machine learning model/rule 201 may be deployed on a self-driving vehicle, or may be deployed on a cloud device. After obtaining an environmental image around the vehicle by using a camera, the self-driving vehicle inputs the obtained image into a preprocessing module, so that the preprocessing module performs segmentation processing on the image to obtain an image block and a pixel block, and converts the obtained image block and pixel block into a vector that meets input requirements of the first feature extraction model and the second feature extraction model. The preprocessing module may be considered as a part of the mature first machine learning model/rule 201, or may be considered as an independent part. When the preprocessing module is an independent part, the preprocessing module may be deployed on a self-driving vehicle, and the mature first machine learning model/rule 201 may be deployed on a cloud device. The first machine learning model/rule 201 performs, by using the first feature extraction model and the second feature extraction model, feature extraction on an environment image around the vehicle obtained by the camera. In a feature extraction process, both an association relationship between image blocks and an association relationship between pixel blocks are retained, so that an extracted image feature can better characterize an area in which each object in an environment around the vehicle is located. This helps a semantic segmentation model in the first machine learning model/rule 201 segment, based on the extracted feature, the image of the environment around the vehicle obtained by the camera, to obtain, from the image through segmentation, areas in which different objects such as a road surface, a roadbed, a vehicle, and a pedestrian are located, so as to keep the vehicle driving in a correct area.

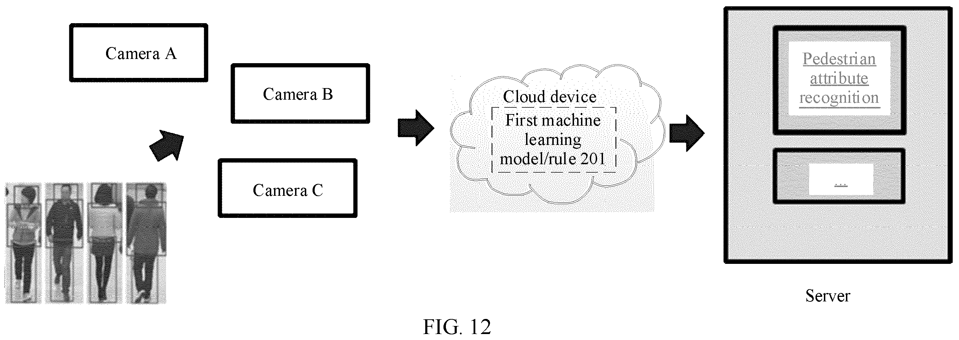

Refer to FIG. 12. When the solution provided in this application is applied to the field of intelligent monitoring, the mature first machine learning model/rule 201 may be deployed on an intelligent monitoring device, or may be deployed on a cloud device. An image obtained by the monitoring device (for example, by using a camera A, a camera B, and a camera C shown in FIG. 12) is input into the preprocessing module, so that the preprocessing module performs segmentation processing on the image, to obtain an image block and a pixel block, and converts the obtained image block and pixel block into a vector that meets input requirements of the first feature extraction model and the second feature extraction model. The preprocessing module may be considered as a part of the mature first machine learning model/rule 201, or may be considered as an independent part. When the preprocessing module is an independent part, the preprocessing module may be deployed on a monitoring vehicle, and the mature first machine learning model/rule 201 may be deployed on a cloud device. The first machine learning model/rule 201 performs, by using the first feature extraction model and the second feature extraction model, feature extraction on an image obtained by the intelligent monitoring device. In a feature extraction process, both an association relationship between image blocks and an association relationship between pixel blocks are retained, so that an extracted image feature can better represent a feature of an object that appears in a perceiving range of the intelligent monitoring device. For example, if a pedestrian attribute is used to recognize a person, an image feature extracted by using the solution provided in this application can better represent an attribute of a pedestrian and a detailed feature of the pedestrian, so that an attribute recognition model in the first machine learning model/rule 201 can recognize, based on the extracted feature, a pedestrian attribute of an image obtained by the intelligent monitoring device, for example, recognize a gender, an age, a hair color, clothes, and wearing of the pedestrian. A pedestrian attribute recognition result may be displayed on a device side, or may be stored in a server.

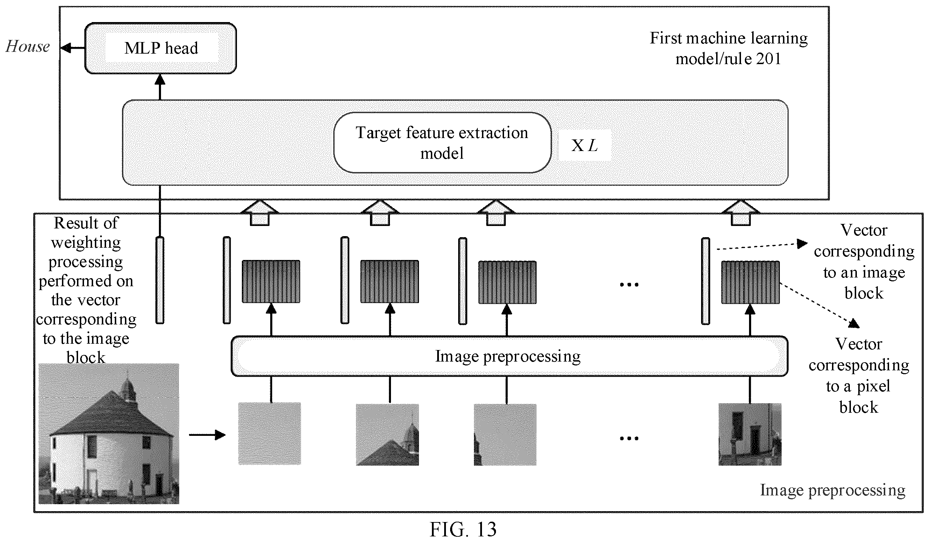

To more intuitively understand beneficial effects brought by this solution, the following describes beneficial effects brought by embodiments of this application with reference to data. During a test, the first machine learning model/rule 201 is used to perform an image classification task. FIG. 13 is a schematic flowchart of performing an image classification task by using a first machine learning model/rule 201. The first machine learning model/rule 201 includes a plurality of target feature extraction models, and each target feature extraction model includes a first feature extraction model and a second feature extraction model. In FIG. 13, L represents a positive integer. The first machine learning model/rule 201 may further include an image preprocessing module, or the image preprocessing module may be used as a module independent of the first machine learning model/rule 201. The image preprocessing module performs segmentation processing on the image to obtain an image block and a pixel block, and converts the obtained image block and pixel block into a vector that meets input requirements of the first feature extraction model and the second feature extraction model. In addition, in a possible implementation, weighting processing may be further performed on vectors corresponding to the plurality of image blocks that meet an input requirement of the first feature extraction model, and the result is also used as an input of the first feature extraction model. For related procedures performed by the image preprocessing module and the target feature extraction model, refer to related descriptions in the embodiments corresponding to FIG. 4 and FIG. 9 for understanding. Details are not described herein again. The first machine learning model/rule 201 may further include a multi-layer perceptron head (multi-layer perceptron head, MLP head). The MLP head is configured to perform an image classification task based on an output of the last target feature extraction model, to output a classification result. For example, in the scenario corresponding to FIG. 13, the output classification result is "house". Configuration information of the first machine learning model/rule 201 used in the first test is shown in Table 1.

**Table 1**

| First machine learning model/rule 201 | Parameter 1 | Parameter 2 | Parameter 3 | Parameter 4 | Parameter 5 | Parameter 6 | Parameter 7 |
|---|---|---|---|---|---|---|---|
| First machine learning model/rule 201 in which a first feature extraction model and a second feature extraction model are deployed | 12 | 24 | 4 | 384 | 6 | 23.8 | 5.2 |

The parameter 1 indicates a quantity of feature extraction modules included in the feature extraction model, that is, the first feature extraction model includes 12 feature extraction modules, and the second feature extraction model includes 12 feature extraction modules. The parameter 2 indicates a requirement of the second feature extraction model on an input vector length. The parameter 3 indicates a quantity of heads (multi-head self-attention) in a self-attention module in the second feature extraction model. The parameter 4 indicates a requirement of the first feature extraction model on an input vector length. The parameter 5 indicates a quantity of heads (multi-head self-attention) in the self-attention module in the first feature extraction model. The parameter 6 indicates a total quantity of parameters in the first machine learning model/rule 201 to which the feature method provided in this application is applied, and a unit of the quantity of parameters is million. The parameter 7 indicates a quantity of floating point operations (FLOPs). The unit is billion.

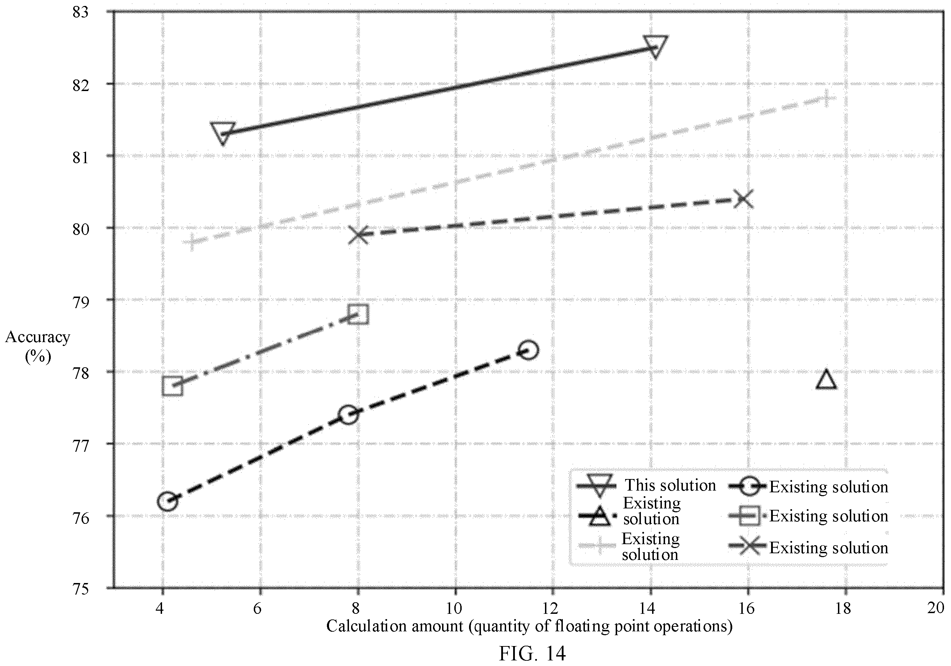

The test data set is an ImageNet data set. An image classification test experiment is performed on the ImageNet data set. FIG. 14 shows a test result. As shown in FIG. 14, compared with several existing image classification models, in the solution provided in this application, in a process of extracting an image feature by using the first machine learning model/rule 201, both an association relationship between image blocks and an association relationship between pixels (or pixel blocks) are retained, so that the image feature extracted by the first machine learning model/rule 201 can well capture a color feature, a texture feature, a shape feature, a spatial relationship feature, and the like of an image. In this way, classification accuracy of the first machine learning model/rule 201 can be improved. Specifically, when calculation amounts of several existing models are the same as those of the first machine learning model/rule 201 to which the feature extraction method provided in this application is applied, accuracy of image classification by the first machine learning model/rule 201 to which the feature extraction method provided in this application is applied is higher. In addition, the test result further shows that, compared with an existing image classification model, a calculation amount of the first machine learning model/rule 201 to which the feature extraction method provided in this application is applied is smaller. In other words, efficiency of the first machine learning model/rule 201 to which the feature extraction method provided in this application is applied is higher. Specifically, when several existing models and the first machine learning model/rule 201 to which the feature extraction method provided in this application is applied have same accuracy of image classification, the first machine learning model/rule 201 to which the feature extraction method provided in this application is applied requires a smaller calculation amount.

The foregoing describes the feature extraction method provided in embodiments of this application. According to the feature extraction method provided in this application, the extracted feature of the to-be-processed object can better characterize the to-be-processed object, and further, performance of a model to which the feature extraction method is applied can be improved.

It may be understood that, to implement the foregoing functions, the following further provides related devices configured to implement the foregoing solutions. The related devices include corresponding hardware structures and/or software modules for performing various functions. A person skilled in the art should be easily aware that modules and algorithm steps in the examples described with reference to the embodiments disclosed in this specification can be implemented by hardware or a combination of hardware and computer software in this application. Whether a function is performed by hardware or by driving hardware by computer software depends on particular applications and design constraints of the technical solutions. A person skilled in the art may use different methods to implement the described functions for each particular application, but it should not be considered that the implementation goes beyond the scope of this application.

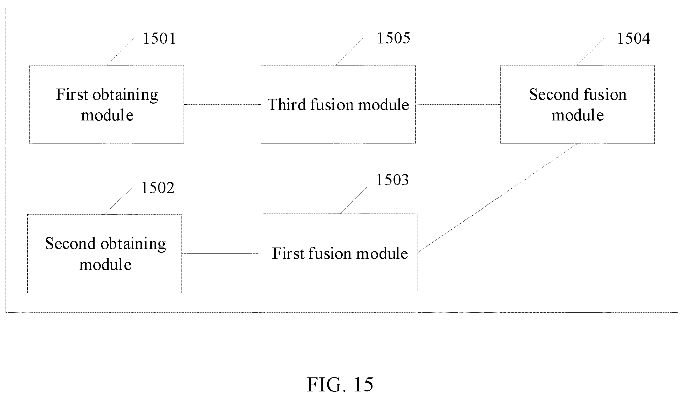

FIG. 15 is a schematic diagram of a structure of an electronic device according to an embodiment of this application. The electronic device may include a first obtaining module 1501, a second obtaining module 1502, a first fusion module 1503, a second fusion module 1504, and a third fusion module 1505.

The first obtaining module 1501 is configured to obtain a first feature, and the second obtaining module 1502 is configured to obtain a plurality of second features, where the first feature is obtained by performing feature extraction on a first vector by using a first feature extraction model, the first vector indicates a first segmented object, the first segmented object includes some elements in a to-be-processed object, the second feature is obtained by performing feature extraction on a second vector by using a second feature extraction model, and the second vector indicates some elements in the first segmented object; the first fusion module 1503 is configured to fuse at least two second features based on a first target weight, to obtain a first fused feature, where the first target weight is determined based on impact of each second feature of the at least two features on a target second feature, and the target second feature is any one of the at least two second features; and the second fusion module 1504 is configured to perform fusion processing on the first feature and the first fused feature to obtain a second fused feature, where the second fused feature is used to obtain a feature of the to-be-processed object.

In a possible implementation, the first obtaining module 1501 is further configured to obtain a third feature, where the third feature is obtained by performing feature extraction on a third vector by using the first feature extraction model, the third vector indicates a second segmented object, and the second segmented object includes some elements in the to-be-processed object; the third fusion module 1505 is configured to fuse the first feature and the third feature based on a second target weight, to obtain a third fused feature, where the second target weight is determined based on impact of the third feature on the first feature; and the second fusion module 1504 is specifically configured to perform fusion processing on the third fused feature and the first fused feature to obtain the second fused feature.

In a possible implementation, the first vector specifically indicates the first segmented object carrying first position information, and the first position information is position information of the first segmented object in the to-be-processed object.

In a possible implementation, each second vector specifically indicates some elements in the first segmented object carrying second position information, and the second position information is position information, in the first segmented object, of some elements in the first segmented object.

In a possible implementation, the second fusion module 1504 is specifically configured to perform end-to-end concatenation processing on the first feature and the first fused feature to obtain the second fused feature.

In a possible implementation, the second fusion module 1504 is specifically configured to perform a target operation on the first feature and the first fused feature to obtain the second fused feature, where the target operation includes at least one of addition or multiplication.

In a possible implementation, the second fusion module 1504 is specifically configured to: when there are a plurality of first fused features, perform end-to-end concatenation processing on the plurality of first fused features to obtain a concatenated feature; map the concatenated feature to a feature of a target length, where the target length is determined based on a length of the first feature; and perform addition processing on the first feature and the feature of the target length to obtain the second fused feature.

In a possible implementation, the first fusion module 1503 is specifically configured to input the at least two second features into a target model, where an output of the target model is the first fused feature, the target model includes one of a self-attention network transformer, a CNN, or a RNN, and when the target model is the transformer, the first target weight is determined based on an inner product between each of the at least two second features and the target second feature, or when the target model is the CNN or the RNN, the first target weight is preset.

In a possible implementation, the to-be-processed object is a to-be-processed image, the first vector specifically indicates a first segmented image, the first segmented image specifically includes some pixels in the to-be-processed image, the second vector specifically indicates some pixels in the first segmented image, and the second fused feature is specifically used to obtain a feature of the to-be-processed image.

In a possible implementation, the electronic device may be the training device 220 described in FIG. 2 or the execution device 210 described in FIG. 2.

It should be noted that content such as information exchange and an execution process between modules in the electronic device shown in FIG. 15 is based on a same concept as the method embodiments corresponding to FIG. 4 to FIG. 10 in this application. For specific content, refer to the descriptions in the foregoing method embodiments in this application. Details are not described herein again.

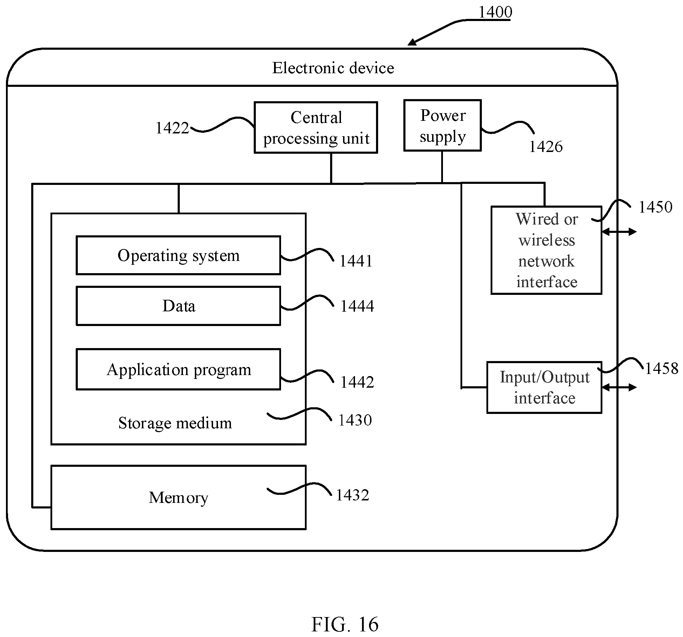

An embodiment of this application further provides an electronic device. FIG. 16 is a schematic diagram of a structure of an electronic device according to an embodiment of this application. The first machine learning model/rule 201 described in FIG. 4 to FIG. 10 may be deployed on the electronic device 1400. The first machine learning model/rule 201 includes a first feature extraction model and a second feature extraction model, configured to perform corresponding steps in FIG. 4 to FIG. 10. Specifically, the electronic device 1400 may vary greatly due to different configurations or performance, and may include one or more central processing units (CPU) 1422 (for example, one or more processors) and a memory 1432, and one or more storage media 1430 (for example, one or more mass storage devices) that store an application program 1442 or data 1444. The memory 1432 and the storage medium 1430 may be transitory storage or persistent storage. In an embodiment, the memory 1432 is a random access memory (RAM), may directly exchange data with the central processing unit 1422, and is configured to load the data 1444 and the application program 1442 and/or the operating system 1441 for direct running and application of the central processing unit 1422, and is usually used as a temporary data storage medium of the operating system or another running program. A program stored in the storage medium 1430 may include one or more modules (not shown in the figure), and each module may include a series of instructions for performing operations on an electronic device. Further, the central processing unit 1422 may be configured to communicate with the storage medium 1430, and perform operations on the electronic device 1400 by using the series of instructions in the storage medium 1430.

The electronic device 1400 may further include one or more power supplies 1426, one or more wired or wireless network interfaces 1450, one or more input/output interfaces 1458, and/or one or more operating systems 1441, such as Windows Server^{™}, Mac OS X^{™}, Unix^{™}, Linux^{™}, or FreeBSD^{™}.

It should be noted that the central processing unit 1422 is further configured to perform other steps performed by the first machine learning model/rule 201 in FIG. 4 to FIG. 10. For a specific implementation of performing, by the central processing unit 1422, the steps performed by the first machine learning model/rule 201 in the embodiments corresponding to FIG. 4 to FIG. 10 and beneficial effects brought by the steps, refer to descriptions in the method embodiments corresponding to FIG. 4 to FIG. 10. Details are not described herein again.

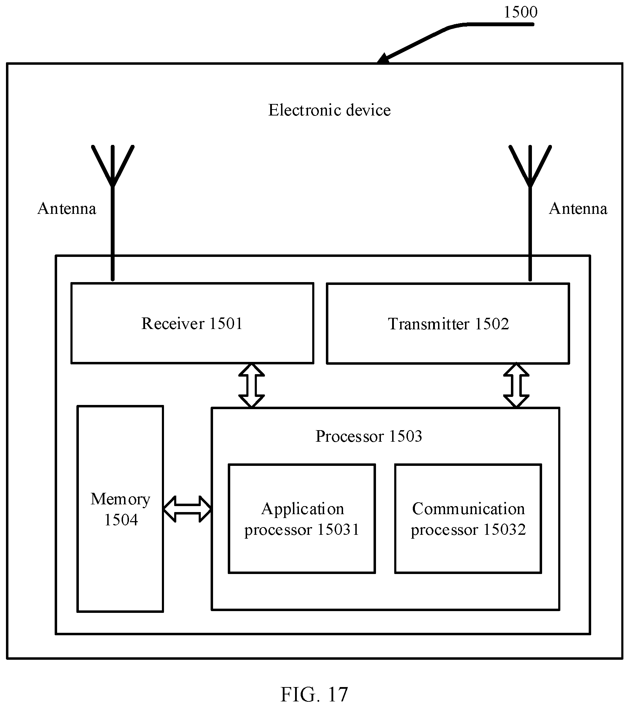

An embodiment of this application further provides an electronic device. FIG. 17 is a schematic diagram of a structure of an electronic device according to an embodiment of this application. The first machine learning model/rule 201 described in FIG. 4 to FIG. 10 may be deployed on the electronic device 1500. The first machine learning model/rule 201 includes a first feature extraction model and a second feature extraction model, configured to perform corresponding steps in FIG. 4 to FIG. 10. Specifically, the electronic device 1500 includes a receiver 1501, a transmitter 1502, a processor 1503, and a memory 1504 (the electronic device 1500 may include one or more processors 1503, and one processor is used as an example in FIG. 17). The processor 1503 may include an application processor 15031 and a communication processor 15032. In some embodiments of this application, the receiver 1501, the transmitter 1502, the processor 1503, and the memory 1504 may be connected by using a bus or in another manner. The memory 1504 may include a read-only memory and a random access memory, and provide instructions and data for the processor 1503. A part of the memory 1504 may further include a non-volatile random access memory (NVRAM). The memory 1504 stores data and operation instructions, an executable module or a data structure, or a subset thereof or an extended set thereof. The operation instructions may include various operation instructions for implementing various operations.

The processor 1503 controls an operation of the electronic device. In a specific application, the components of the electronic device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1503, or may be implemented by the processor 1503. The processor 1503 may be an integrated circuit chip with a signal processing capability. In an implementation process, the steps in the foregoing methods may be implemented by using a hardware integrated logical circuit in the processor 1503, or by using instructions in a form of software. The processor 1503 may be a general-purpose processor, a digital signal processor (DSP), a microprocessor, or a microcontroller, and may further include an application-specific integrated circuit (ASIC), a field programmable gate array (FPGA) or another programmable logic device, a discrete gate or transistor logic device, or a discrete hardware component. The processor 1503 may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1504. The processor 1503 reads information in the memory 1504 and completes the steps in the foregoing methods in combination with hardware in the processor 1503.

The receiver 1501 may be configured to receive input digit or character information, and generate a signal input related to a related setting and function control of the execution device. The transmitter 1502 may be configured to output digit or character information through an interface. The transmitter 1502 may be further configured to send an instruction to a disk group through the interface, to modify data in the disk group. The transmitter 1502 may further include a display device such as a display screen.

In one case, in this embodiment of this application, the application processor 15031 is configured to perform the method performed by the first machine learning model/rule 201 described in the embodiments corresponding to FIG. 4 to FIG. 10.

For a specific implementation in which the application processor 15031 performs the functions of the first machine learning model/rule 201 in the embodiments corresponding to FIG. 4 to FIG. 10 and beneficial effects brought by the functions, refer to the descriptions in the method embodiments corresponding to FIG. 4 to FIG. 10. Details are not described herein again.

It should be understood that the foregoing is merely an example provided in this embodiment of this application. In addition, the vehicle may have more or fewer components than shown components, or may combine two or more components, or may have different component configurations.

All or some of the foregoing embodiments may be implemented by software, hardware, firmware, or any combination thereof. When software is used to implement the embodiments, all or some of the embodiments may be implemented in a form of a computer program product.

The execution device and the training device in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the feature extraction method described in the embodiments shown in FIG. 4 to FIG. 10. Optionally, the storage unit is an on-chip storage unit, for example, a register or a buffer. Alternatively, the storage unit may be an off-chip storage unit, for example, a read-only memory (ROM), another type of static storage device that can store static information and instructions, or a random access memory (RAM) in a wireless access device.

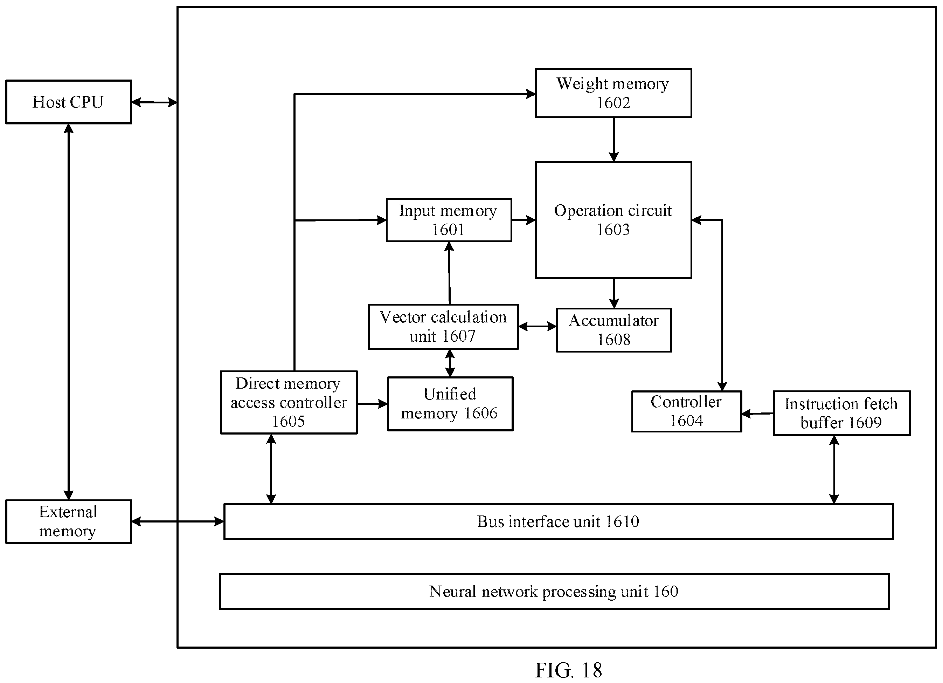

Specifically, FIG. 18 is a schematic diagram of a structure of a chip according to an embodiment of this application. The chip may be represented as a neural network processing unit NPU 160. The NPU 160 is mounted to a host CPU as a coprocessor, and the host CPU assigns a task. A core part of the NPU is an operation circuit 1603. A controller 1604 controls the operation circuit 1603 to extract matrix data in a memory and perform a multiplication operation. In some implementations, the operation circuit 1603 internally includes a plurality of processing units (PE). In some implementations, the operation circuit 1603 is a two-dimensional systolic array. The operation circuit 1603 may alternatively be a one-dimensional systolic array or another electronic circuit capable of performing mathematical operations such as multiplication and addition. In some implementations, the operation circuit 1603 is a general-purpose matrix processor.

For example, it is assumed that there is an input matrix A, a weight matrix B, and an output matrix C. The operation circuit fetches, from the weight memory 1602, data corresponding to the matrix B, and buffers the data on each PE in the operation circuit. The operation circuit fetches data of the matrix A from an input memory 1601, performs a matrix operation on the data with the matrix B, and stores an obtained partial result or final result of the matrix in an accumulator 1608.

A unified memory 1606 is configured to store input data and output data. Weight data is directly transferred to the weight memory 1602 by using a direct memory access controller (DMAC) 1605. The input data is also transferred to the unified memory 1606 by using the DMAC.

A bus interface unit 1610 (BIU for short) is used by an instruction fetch buffer 1609 to obtain an instruction from an external memory, and further used by the direct memory access controller 1605 to obtain original data of the input matrix A or the weight matrix B from the external memory.

The DMAC is mainly configured to transfer the input data in the external memory DDR to the unified memory 1606, transfer the weight data to the weight memory 1602, or transfer the input data to the input memory 1601.

A vector calculation unit 1607 includes a plurality of arithmetic processing units. When necessary, the vector calculation unit 1607 performs further processing on an output of the operation circuit, for example, vector multiplication, vector addition, exponential operation, logarithmic operation, and value comparison. The vector calculation unit 1607 is mainly configured to perform network calculation, such as batch normalization, pixel-level summation, and upsampling on a feature map at a non-convolutional or non fully connected layer in a neural network. In some implementations, the vector calculation unit 1607 can store a processed output vector in the unified memory 1606. For example, the vector calculation unit 1607 may apply a linear function and/or a nonlinear function to the output of the operation circuit 1603, for example, perform linear interpolation on a feature map extracted by a convolutional layer, or for another example, accumulate value vectors to generate an activation value. In some implementations, the vector calculation unit 1607 generates a normalized value, a pixel-level summation value, or both. In some implementations, the processed output vector can be used as an activation input to the operation circuit 1603, for example, for use at a subsequent layer in the neural network.

The instruction fetch buffer1609 connected to the controller 1604 is configured to store an instruction used by the controller 1604. All of the unified memory 1606, the input memory 1601, the weight memory 1602, and the instruction fetch buffer 1609 are on-chip memories. The external memory is private for a hardware architecture of the NPU. An operation at each layer in a recurrent neural network may be performed by the operation circuit 1603 or the vector calculation unit 1607.

Any one of the foregoing processors may be a general-purpose central processing unit, a microprocessor, an ASIC, or one or more integrated circuits for controlling program execution of a program of the method of the first aspect.

An embodiment of this application further provides a chip. The chip includes a processing unit and a communication unit. The processing unit may be, for example, a processor. The communication unit may be, for example, an input/output interface, a pin, or a circuit. The processing unit may execute a computer-executable instruction stored in the storage unit, so that the chip performs the method described in FIG. 4 to FIG. 10. Optionally, the storage unit is an on-chip storage unit, for example, a register or a buffer. Alternatively, the storage unit may be an off-chip storage unit, for example, a read-only memory (ROM), another type of static storage device that can store static information and instructions, or a random access memory (RAM) in the device. Specifically, the processing unit or processor may be a central processing unit (CPU), a network processor (NPU), a graphics processing unit (GPU), a digital signal processor (DSP), an application-specific integrated circuit (ASIC) or a field programmable gate array (FPGA) or another programmable logic device, a discrete gate or a transistor logic device, a discrete hardware component, or the like. The general-purpose processor may be a microprocessor or any conventional processor or the like.

An embodiment of this application further provides a computer-readable storage medium. The computer-readable storage medium stores a program used for training a model. When the program runs on a computer, the computer is enabled to perform the methods described in FIG. 4 to FIG. 10.

An embodiment of this application further provides a computer program product. When the computer program product runs on a computer, the computer is enabled to perform the steps in the methods described in the embodiments shown in FIG. 4 to FIG. 10. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or may be a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

An embodiment of this application further provides a circuit system. The circuit system includes a processing circuit, and the processing circuit is configured to perform steps in the methods described in the embodiments shown in FIG. 4 to FIG. 10.

Based on the description of the foregoing implementations, a person skilled in the art may clearly understand that this application may be implemented by pure software or by using software in addition to necessary universal hardware, or may certainly be implemented by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application. In addition, the computer software product may also be embodied in the form of controls, drivers, independent or downloadable software objects, or the like.

In the specification, claims, and the accompanying drawings of this application, the terms "first", "second", and the like are intended to distinguish similar objects but do not necessarily indicate a specific order or sequence. It should be understood that the data used in such a way are interchangeable in proper circumstances so that embodiments of the present invention described herein can be implemented in other orders than the order illustrated or described herein. The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. In addition, the terms "include", "have", and any other variant thereof are intended to cover a non-exclusive inclusion. For example, a process, method, system, product, or device that includes a list of steps or modules is not necessarily limited to those steps or units that are expressly listed, but may include other steps or modules that are not expressly listed or are inherent to the process, method, system, product, or device. Naming or numbering of steps in this application does not mean that steps in a method process need to be performed in a time or logical sequence indicated by the naming or numbering. An execution sequence of the named or numbered process steps may be changed according to a technical objective to be achieved, provided that same or similar technical effects can be achieved. Division into the modules in this application is logical division. In actual application, there may be another division manner. For example, a plurality of modules may be combined or integrated into another system, or some features may be ignored or not performed. In addition, the displayed or discussed mutual coupling or direct coupling or communication connection may be through some ports, and the indirect coupling or communication connection between modules may be in an electrical form or another similar form. This is not limited in this application. In addition, modules or sub-modules described as separate components may be or may not be physically separated, or may be or may not be physical modules, or may not be grouped into multiple circuit modules. Objectives of the solutions of this application may be achieved by selecting some or all of the modules according to actual requirements.

## Claims

1. A feature extraction method, comprising:
performing (401) segmentation processing on a to-be-processed object to obtain a first segmented to-be-processed object, wherein the to-be-processed object is an image and the first segmented to-be-processed object is an image block, wherein each image block includes some pixels in the image, and all image blocks form the image,
obtaining (402) a plurality of element sets for each segmented to-be-processed object, wherein each element set corresponds to a pixel block,
obtaining (403) a first feature and a plurality of second features, wherein the first feature is obtained by performing feature extraction on a first vector by using a first feature extraction model, the first vector indicates the first segmented object, the second feature is obtained by performing feature extraction on a second vector by using a second feature extraction model, and the second vector indicates the pixel block;
wherein the first feature extraction model establishes an association relationship between image blocks and the second feature extraction model establishes an association relationship between pixel blocks within each image block;
fusing (404) at least two second features based on a first target weight, to obtain a first fused feature, wherein the first target weight is determined based on a first parameter value, the first parameter value indicates a similarity between each of the at least two second features and a target second feature, and the target second feature is any one of the at least two second features; or the first target weight is a second parameter value, and the second parameter value comprises at least one preset constant; and
performing (405) fusion processing on the first feature and the first fused feature to obtain a second fused feature, wherein the second fused feature is used to obtain a feature of the to-be-processed object, wherein the feature of the to-be-processed object includes a color feature, a texture feature, a shape feature and/or a spatial relationship feature of the image.

2. The method according to claim 1, wherein the method further comprises:
obtaining a third feature, wherein the third feature is obtained by performing feature extraction on a third vector by using the first feature extraction model, the third vector indicates a second segmented object, and the second segmented object comprises some elements in the to-be-processed object; and
the performing fusion processing on the first feature and the first fused feature to obtain a second fused feature comprises:
fusing the first feature and the third feature based on a second target weight, to obtain a third fused feature, wherein the second target weight is determined based on a third parameter value, and the third parameter value indicates a similarity between the third feature and the first feature; or the second target weight is a fourth parameter value, and the fourth parameter value comprises at least one preset constant; and
performing fusion processing on the third fused feature and the first fused feature to obtain the second fused feature.

3. The method according to claim 1 or 2, wherein the first vector specifically indicates the first segmented object carrying first position information, and the first position information is position information of the first segmented object in the to-be-processed object.

4. The method according to any one of claims 1 to 3, wherein each second vector specifically indicates some elements in the first segmented object carrying second position information, and the second position information is position information, in the first segmented object, of some elements in the first segmented object.

5. The method according to any one of claims 1 to 4, wherein the performing fusion processing on the first feature and the first fused feature to obtain a second fused feature comprises:
performing end-to-end concatenation processing on the first feature and the first fused feature to obtain the second fused feature.

6. The method according to any one of claims 1 to 4, wherein the performing fusion processing on the first feature and the first fused feature to obtain a second fused feature comprises:
performing a target operation on the first feature and the first fused feature to obtain the second fused feature, wherein the target operation comprises at least one of addition or multiplication.

7. The method according to claim 6, wherein the performing a target operation on the first feature and the first fused feature to obtain the second fused feature comprises:
when there are a plurality of first fused features, performing end-to-end concatenation processing on the plurality of first fused features to obtain a concatenated feature;
mapping the concatenated feature to a feature of a target length, wherein the target length is determined based on a length of the first feature; and
performing addition processing on the first feature and the feature of the target length to obtain the second fused feature.

8. The method according to any one of claims 1 to 7, wherein the fusing at least two second features based on a first target weight, to obtain a first fused feature comprises:
inputting the at least two second features into a target model, wherein an output of the target model is the first fused feature, the target model comprises one of a self-attention network transformer, a convolutional neural network, CNN, or a recurrent neural network, RNN, and when the target model is the transformer, the first target weight is determined based on an inner product between each of the at least two second features and the target second feature, or when the target model is the CNN or the RNN, the first target weight is the second parameter value.

9. The method according to any one of claims 1 to 8, wherein the to-be-processed object is a to-be-processed image, the first vector specifically indicates a first segmented image, the first segmented image specifically comprises some pixels in the to-be-processed image, the second vector specifically indicates some pixels in the first segmented image, and the second fused feature is specifically used to obtain a feature of the to-be-processed image.

10. An electronic device (1500), comprising a processor (1503), wherein the processor (1503) is coupled to a memory (1504), the memory (1504) stores program instructions, and when the program instructions stored in the memory (1504) are executed by the processor (1503), the method according to any one of claims 1 to 9 is implemented.

11. A computer-readable storage medium, comprising a program, wherein when the program is run on a computer, the computer is enabled to perform the method according to any one of claims 1 to 9.

12. A chip, wherein the chip is coupled to a memory, and configured to execute a program stored in the memory, to perform the method according to any one of claims 1 to 9.

## Patentansprüche

1. Verfahren zur Merkmalsextraktion, umfassend:
Durchführen (401) einer Segmentierungsverarbeitung an einem zu verarbeitenden Objekt, um ein erstes segmentiertes zu verarbeitendes Objekt zu erlangen, wobei das zu verarbeitende Objekt ein Bild ist und das erste segmentierte zu verarbeitende Objekt ein Bildblock ist, wobei jeder Bildblock einige Pixel in dem Bild beinhaltet und alle Bildblöcke das Bild ausbilden,
Erlangen (402) einer Vielzahl von Elementsätzen für jedes segmentierte zu verarbeitende Objekt, wobei jeder Elementsatz einem Pixelblock entspricht,
Erlangen (403) eines ersten Merkmals und einer Vielzahl von zweiten Merkmalen, wobei das erste Merkmal durch Durchführen einer Merkmalsextraktion an einem ersten Vektor unter Verwendung eines ersten Modells zur Merkmalsextraktion erlangt wird, der erste Vektor das erste segmentierte Objekt anzeigt, das zweite Merkmal durch Durchführen einer Merkmalsextraktion an einem zweiten Vektor unter Verwendung eines zweiten Modells zur Merkmalsextraktion erlangt wird und der zweite Vektor den Pixelblock anzeigt;
wobei das erste Modell zur Merkmalsextraktion eine Assoziationsbeziehung zwischen Bildblöcken herstellt und das zweite Modell zur Merkmalsextraktion eine Assoziationsbeziehung zwischen Pixelblöcken innerhalb jedes Bildblocks herstellt;
Fusionieren (404) von mindestens zwei zweiten Merkmalen basierend auf einem ersten Zielgewicht, um ein erstes fusioniertes Merkmal zu erlangen, wobei das erste Zielgewicht basierend auf einem ersten Parameterwert bestimmt wird, der erste Parameterwert eine Ähnlichkeit zwischen jedem der mindestens zwei zweiten Merkmale und einem zweiten Zielmerkmal anzeigt, und das zweite Zielmerkmal ein beliebiges der mindestens zwei zweiten Merkmale ist; oder das erste Zielgewicht ein zweiter Parameterwert ist und der zweite Parameterwert mindestens eine voreingestellte Konstante umfasst; und
Durchführen (405) einer Fusionsverarbeitung an dem ersten Merkmal und dem ersten fusionierten Merkmal, um ein zweites fusioniertes Merkmal zu erlangen, wobei das zweite fusionierte Merkmal verwendet wird, um ein Merkmal des zu verarbeitenden Objekts zu erlangen, wobei das Merkmal des zu verarbeitenden Objekts ein Farbmerkmal, ein Texturmerkmal, ein Formmerkmal und/oder ein Merkmal der räumlichen Beziehung des Bildes beinhaltet.

2. Verfahren nach Anspruch 1, wobei das Verfahren ferner Folgendes umfasst:
Erlangen eines dritten Merkmals, wobei das dritte Merkmal durch Durchführen einer Merkmalsextraktion an einem dritten Vektor unter Verwendung des ersten Modells zur Merkmalsextraktion erlangt wird,
der dritte Vektor ein zweites segmentiertes Objekt anzeigt und das zweite segmentierte Objekt einige Elemente in dem zu verarbeitenden Objekt umfasst; und
das Durchführen einer Fusionsverarbeitung an dem ersten Merkmal und dem ersten fusionierten Merkmal, um ein zweites fusioniertes Merkmal zu erlangen, Folgendes umfasst:
Fusionieren des ersten Merkmals und des dritten Merkmals basierend auf einem zweiten Zielgewicht, um ein drittes fusioniertes Merkmal zu erlangen, wobei das zweite Zielgewicht basierend auf einem dritten Parameterwert bestimmt wird, und der dritte Parameterwert eine Ähnlichkeit zwischen dem dritten Merkmal und dem ersten Merkmal anzeigt; oder das zweite Zielgewicht ein vierter Parameterwert ist und der vierte Parameterwert mindestens eine voreingestellte Konstante umfasst; und
Durchführen einer Fusionsverarbeitung an dem dritten fusionierten Merkmal und dem ersten fusionierten Merkmal, um das zweite fusionierte Merkmal zu erlangen.

3. Verfahren nach Anspruch 1 oder 2, wobei der erste Vektor insbesondere das erste segmentierte Objekt anzeigt, das erste Positionsinformationen enthält, und die ersten Positionsinformationen Positionsinformationen des ersten segmentierten Objekts in dem zu verarbeitenden Objekt sind.

4. Verfahren nach einem der Ansprüche 1 bis 3, wobei jeder zweite Vektor insbesondere einige Elemente in dem ersten segmentierten Objekt anzeigt, die zweite Positionsinformationen enthalten, und die zweiten Positionsinformationen Positionsinformationen in dem ersten segmentierten Objekt von einigen Elementen in dem ersten segmentierten Objekt sind.

5. Verfahren nach einem der Ansprüche 1 bis 4, wobei das Durchführen der Fusionsverarbeitung an dem ersten Merkmal und dem ersten fusionierten Merkmal, um ein zweites fusioniertes Merkmal zu erlangen, Folgendes umfasst:
Durchführen einer End-to-End-Verkettung an dem ersten Merkmal und dem ersten fusionierten Merkmal, um das zweite fusionierte Merkmal zu erlangen.

6. Verfahren nach einem der Ansprüche 1 bis 4, wobei das Durchführen der Fusionsverarbeitung an dem ersten Merkmal und dem ersten fusionierten Merkmal, um ein zweites fusioniertes Merkmal zu erlangen, Folgendes umfasst:
Durchführen einer Zieloperation an dem ersten Merkmal und dem ersten fusionierten Merkmal, um das zweite fusionierte Merkmal zu erlangen, wobei die Zieloperation mindestens eines von Addition oder Multiplikation umfasst.

7. Verfahren nach Anspruch 6, wobei das Durchführen einer Zieloperation an dem ersten Merkmal und dem ersten fusionierten Merkmal, um das zweite fusionierte Merkmal zu erlangen, Folgendes umfasst:
wenn es eine Vielzahl von ersten fusionierten Merkmalen gibt, Durchführen einer End-zu-End-Verkettungsverarbeitung an der Vielzahl von ersten fusionierten Merkmalen, um ein verkettetes Merkmal zu erlangen;
Abbilden des verketteten Merkmals auf einem Merkmal mit einer Ziellänge, wobei die Ziellänge basierend auf einer Länge des ersten Merkmals bestimmt wird; und
Durchführen einer Additionsverarbeitung an dem ersten Merkmal und dem Merkmal der Ziellänge, um das zweite fusionierte Merkmal zu erlangen.

8. Verfahren nach einem der Ansprüche 1 bis 7, wobei das Fusionieren von mindestens zwei zweiten Merkmalen basierend auf einem ersten Zielgewicht, um ein erstes fusioniertes Merkmal zu erlangen, Folgendes umfasst:
Eingeben der mindestens zwei zweiten Merkmale in ein Zielmodell, wobei eine Ausgabe des Zielmodells das erste fusionierte Merkmal ist, das Zielmodell eines von einem Selbstaufmerksamkeitsnetzwerk-Transformator, einem faltungsneuronalen Netzwerk, CNN, oder einem rekurrenten neuronalen Netzwerk, RNN, umfasst, und, wenn das Zielmodell der Transformator ist, das erste Zielgewicht basierend auf einem inneren Produkt zwischen jedem der mindestens zwei zweiten Merkmale und dem zweiten Zielmerkmal bestimmt wird, oder, wenn das Zielmodell das CNN oder das RNN ist, das erste Zielgewicht der zweite Parameterwert ist.

9. Verfahren nach einem der Ansprüche 1 bis 8, wobei das zu verarbeitende Objekt ein zu verarbeitendes Bild ist, der erste Vektor insbesondere ein erstes segmentiertes Bild anzeigt, das erste segmentierte Bild insbesondere einige Pixel in dem zu verarbeitenden Bild umfasst, der zweite Vektor insbesondere einige Pixel in dem ersten segmentierten Bild anzeigt und das zweite fusionierte Merkmal insbesondere verwendet wird, um ein Merkmal des zu verarbeitenden Bildes zu erlangen.

10. Elektronische Vorrichtung (1500), umfassend einen Prozessor (1503), wobei der Prozessor (1503) mit einem Speicher (1504) gekoppelt ist, der Speicher (1504) Programmanweisungen speichert; und, wenn die Programmanweisungen, die in dem Speicher (1504) gespeichert sind, durch den Prozessor (1503) ausgeführt werden, das Verfahren nach einem der Ansprüche 1 bis 9 implementiert wird.

11. Computerlesbares Speichermedium, umfassend ein Programm, wobei, wenn das Programm auf einem Computer ausgeführt wird, der Computer in die Lage versetzt wird, das Verfahren nach einem der Ansprüche 1 bis 9 durchzuführen.

12. Chip, wobei der Chip mit einem Speicher gekoppelt ist und dazu konfiguriert ist, ein Programm auszuführen, das in dem Speicher gespeichert ist, um das Verfahren nach einem der Ansprüche 1 bis 9 durchzuführen.

## Revendications

1. Procédé d'extraction de caractéristiques, comprenant :
la réalisation (401) d'un traitement de segmentation sur un objet à traiter pour obtenir un premier objet segmenté à traiter, dans lequel l'objet à traiter est une image et le premier objet segmenté à traiter est un bloc d'image, dans lequel chaque bloc d'image comporte certains pixels de l'image, et tous les blocs d'image forment l'image,
l'obtention (402) d'une pluralité d'ensembles d'éléments pour chaque objet segmenté à traiter, dans lequel chaque ensemble d'éléments correspondent à un bloc de pixels,
l'obtention (403) d'une première caractéristique et d'une pluralité de deuxièmes caractéristiques, dans lequel la première caractéristique est obtenue par la réalisation d'une extraction de caractéristiques sur un premier vecteur à l'aide d'un premier modèle d'extraction de caractéristiques, le premier vecteur indique le premier objet segmenté, la deuxième caractéristique est obtenue par la réalisation d'une extraction de caractéristiques sur un deuxième vecteur à l'aide d'un deuxième modèle d'extraction de caractéristiques, et le deuxième vecteur indique le bloc de pixels ;
dans lequel le premier modèle d'extraction de caractéristiques établit une relation d'association entre les blocs d'images et le deuxième modèle d'extraction de caractéristiques établit une relation d'association entre les blocs de pixels au sein de chaque bloc d'image ;
la fusion (404) d'au moins deux deuxièmes caractéristiques sur la base d'une première pondération cible, afin d'obtenir une première caractéristique fusionnée, dans lequel la première pondération cible est déterminée sur la base d'une première valeur de paramètre, la première valeur de paramètre indique une similarité entre chacune des au moins deux deuxièmes caractéristiques et une deuxième caractéristique cible, et la deuxième caractéristique cible est l'une quelconque des au moins deux deuxièmes caractéristiques ; ou la première pondération cible est une deuxième valeur de paramètre, et la deuxième valeur de paramètre comprend au moins une constante prédéfinie ; et
la réalisation (405) d'un traitement de fusion sur la première caractéristique et la première caractéristique fusionnée pour obtenir une deuxième caractéristique fusionnée, dans lequel la deuxième caractéristique fusionnée est utilisée pour obtenir une caractéristique de l'objet à traiter, dans lequel la caractéristique de l'objet à traiter comporte une caractéristique de couleur, une caractéristique de texture, une caractéristique de forme et/ou une caractéristique de relation spatiale de l'image.

2. Procédé selon la revendication 1, dans lequel le procédé comprend en outre :
l'obtention d'une troisième caractéristique, dans lequel la troisième caractéristique est obtenue par la réalisation d'une extraction de caractéristiques sur un troisième vecteur à l'aide du premier modèle d'extraction de caractéristiques, le troisième vecteur indique un second objet segmenté, et le second objet segmenté comprend certains éléments de l'objet à traiter ; et
le traitement de fusion appliqué à la première caractéristique et à la première caractéristique fusionnée pour obtenir une deuxième caractéristique fusionnée comprend :
la fusion de la première et de la troisième caractéristique sur la base d'une seconde pondération cible, afin d'obtenir une troisième caractéristique fusionnée, dans lequel la seconde pondération cible est déterminée sur la base d'une troisième valeur de paramètre, et la troisième valeur de paramètre indique une similarité entre la troisième caractéristique et la première caractéristique ; ou bien la seconde pondération cible est une quatrième valeur de paramètre, et la quatrième valeur de paramètre comprend au moins une constante prédéfinie ; et
l'obtention d'un traitement de fusion sur la troisième caractéristique fusionnée et la première caractéristique fusionnée pour obtenir la deuxième caractéristique fusionnée.

3. Procédé selon la revendication 1 ou 2, dans lequel le premier vecteur indique spécifiquement le premier objet segmenté portant les premières informations de position, et les premières informations de position sont les informations de position du premier objet segmenté dans l'objet à traiter.

4. Procédé selon l'une quelconque des revendications 1 à 3, dans lequel chaque deuxième vecteur indique spécifiquement certains éléments dans le premier objet segmenté portant des informations de deuxième position, et les informations de deuxième position sont des informations de position, dans le premier objet segmenté, de certains éléments dans le premier objet segmenté.

5. Procédé selon l'une quelconque des revendications 1 à 4, dans lequel la réalisation du traitement de fusion à la première caractéristique et à la première caractéristique fusionnée pour obtenir une deuxième caractéristique fusionnée comprend :
la réalisation d'un traitement de concaténation de bout en bout sur la première caractéristique et la première caractéristique fusionnée pour obtenir la deuxième caractéristique fusionnée.

6. Procédé selon l'une quelconque des revendications 1 à 4, dans lequel le traitement de fusion appliqué à la première caractéristique et à la première caractéristique fusionnée pour obtenir une deuxième caractéristique fusionnée comprend :
la réalisation d'une opération cible sur la première caractéristique et la première caractéristique fusionnée pour obtenir la deuxième caractéristique fusionnée, dans lequel l'opération cible comprend au moins l'une d'une addition ou d'une multiplication.

7. Procédé selon la revendication 6, dans lequel la réalisation d'une opération cible sur la première caractéristique et la première caractéristique fusionnée pour obtenir la deuxième caractéristique fusionnée comprend :
lorsqu'il existe une pluralité de premières caractéristiques fusionnées, la réalisation d'un traitement de concaténation de bout en bout sur la pluralité de premières caractéristiques fusionnées pour obtenir une caractéristique concaténée ;
le mappage de la caractéristique concaténée sur une caractéristique de longueur cible, dans lequel la longueur cible est déterminée sur la base d'une longueur de la première caractéristique ; et
la réalisation d'un traitement d'addition sur la première caractéristique et la caractéristique de longueur cible pour obtenir la deuxième caractéristique fusionnée.

8. Procédé selon l'une quelconque des revendications 1 à 7, dans lequel la fusion d'au moins deux deuxièmes caractéristiques sur la base d'un premier poids cible, pour obtenir une première caractéristique fusionnée, comprend :
l'intégration d'au moins deux deuxièmes caractéristiques dans un modèle cible, dans lequel une sortie du modèle cible est la première caractéristique fusionnée, le modèle cible comprend l'un d'un transformateur de réseau d'auto-attention, d'un réseau neuronal convolutif, CNN, ou d'un réseau neuronal récurrent, RNN, et lorsque le modèle cible est le transformateur, le premier poids cible est déterminé sur la base d'un produit interne entre chacune des au moins deux deuxièmes caractéristiques et la deuxième caractéristique cible, ou lorsque le modèle cible est un CNN ou un RNN, le premier poids cible est la valeur de deuxième paramètre.

9. Procédé selon l'une quelconque des revendications 1 à 8, dans lequel l'objet à traiter est une image à traiter, le premier vecteur indique spécifiquement une première image segmentée, la première image segmentée comprend spécifiquement certains pixels de l'image à traiter, le deuxième vecteur indique spécifiquement certains pixels de la première image segmentée, et la deuxième caractéristique fusionnée est spécifiquement utilisée pour obtenir une caractéristique de l'image à traiter.

10. Dispositif électronique (1500), comprenant un processeur (1503), dans lequel le processeur (1503) est couplé à une mémoire (1504), la mémoire (1504) stocke des instructions de programme, et lorsque les instructions de programme stockées dans la mémoire (1504) sont exécutées par le processeur (1503), le procédé selon l'une quelconque des revendications 1 à 9 est mis en œuvre.

11. Support de stockage lisible par ordinateur, comprenant un programme, dans lequel lorsque le programme est exécuté sur un ordinateur, l'ordinateur est activé pour réaliser le procédé selon l'une quelconque des revendications 1 à 9.

12. Puce, dans laquelle la puce est couplée à une mémoire, et configurée pour exécuter un programme stocké dans la mémoire, pour réaliser le procédé selon l'une quelconque des revendications 1 à 9.
